# EUROPEAN PATENT SPECIFICATION

(11) **EP 4 390 799 B1**
(45) Date of publication and mention of the grant of the patent: **16.09.2026**
(21) Application number: 23213920.4
(22) Date of filing: 04.12.2023
(51) Int. Cl.: G06Q 10/0631

(54) **EMISSION OPTIMIZATION FOR INDUSTRIAL PROCESSES**
EMISSIONSOPTIMIERUNG FÜR INDUSTRIELLE PROZESSE
OPTIMISATION D'ÉMISSION POUR PROCESSUS INDUSTRIELS

(30) Priority: 20.12.2022 US 202263476284 P; 24.05.2023 US 202318322912
(43) Date of publication of application: 26.06.2024
(73) Proprietor: Honeywell International Inc., Charlotte, NC 28202 (US)
(72) Inventor: COPPERHITE, Amanda, Charlotte, 28202 (US); SRINIVASAN, Ravikrishnan, Charlotte, 28202 (US); KESTER, Robert, Charlotte, 28202 (US)
(74) Representative: Haseltine Lake Kempner LLP

(56) References cited:
- WO-A1-2015/184123
- US-A1- 2018 299 878

## Description

### CROSS REFERENCE TO RELATED APPLICATIONS

This application claims the benefit of U.S. Provisional Patent Application No. 63/476,284, titled "EMISSION OPTIMIZATION FOR INDUSTRIAL PROCESSES," and filed on December 20, 2022.

### TECHNICAL FIELD

The present disclosure relates generally to industrial process control systems, and more particularly to optimization of emissions related to industrial processes.

### BACKGROUND

Industrial processes are often managed using industrial control systems. However, traditional industrial control systems typically utilize historical data and/or static control measures to manage emissions related to industrial processes. Additionally, emissions reporting related to industrial processes typically rely on theoretical calculations and/or emission estimates. As such, typical industrial processes are often executed in an inefficient and/or undesirable manner, especially with respect to emissions.

WO 2015/184123 A1 concerns fault analysis in management systems.

US 2018/299878 A1 concerns data collection in industrial environments.

### SUMMARY

Aspects of the present invention are defined in the accompanying claims. According to a first aspect there is provided a system in accordance with claim 1. According to a second aspect there is provided a computer-implemented method in accordance with claim 12. Advantageous optional features are defined in the dependent claims. The details of some embodiments of the subject matter described in this specification are set forth in the accompanying drawings and the description below. Other features, aspects, and advantages of the subject matter will become apparent from the description, the drawings, and the claims.

In an embodiment, a system comprises one or more processors and a memory having program code stored thereon. The program code, in execution with the at least one processor, causes the system to determine a set of emission constraints associated with emission optimization for an industrial domain related to one or more industrial processes that produce one or more industrial process products. In one or more embodiments, the program code, in execution with the at least one processor, also causes the system to configure an emission optimization model based at least in part on the set of emission constraints and at least one other non-emission constraint. In one or more embodiments, the program code, in execution with the at least one processor, also causes the system to receive an emission optimization request to optimize carbon emissions related to the one or more industrial processes.

In one or more embodiments, the program code, in execution with the at least one processor, also causes the system to, in response to the emission optimization request, apply the emission optimization model to real-time measurement data associated with the one or more industrial processes to determine one or more operational modifications for the one or more industrial processes that at least satisfy the set of emission constraints and optimize the at least one non-emission constraint, wherein at least a portion of the real-time measurement data are captured by a set of sensors configured to monitor real-time emissions related to the one or more industrial processes. In one or more embodiments, the program code, in execution with the at least one processor, also causes the system to, in response to the emission optimization request and based on the one or more operational modifications, perform one or more actions associated with the one or more industrial processes, and transmit a control signal configured based on the one or more operational modifications to a controller associated with the one or more industrial processes.

In another embodiment, a computer-implemented method is provided. The computer-implemented method provides for determining a set of emission constraints associated with emission optimization for an industrial domain related to one or more industrial processes that produce one or more industrial process products. In one or more embodiments, the computer-implemented method also provides for configuring an emission optimization model based at least in part on the set of emission constraints and at least one other non-emission constraint. In one or more embodiments, the computer-implemented method also provides for receiving an emission optimization request to optimize carbon emissions related to the one or more industrial processes. In one or more embodiments, the computer-implemented method also provides for, in response to the emission optimization request, applying the emission optimization model to real-time measurement data associated with the one or more industrial processes to determine one or more operational modifications for the one or more industrial processes that at least satisfy the set of emission constraints and optimize the at least one non-emission constraint. In one or more embodiments, the computer-implemented method also provides for, in response to the emission optimization request and based on the one or more operational modifications, performing one or more actions associated with the one or more industrial processes.

In yet another embodiment, a computer program product comprises at least one non-transitory computer-readable storage medium having computer-readable program code portions stored therein. The computer-readable program code portions comprise an executable portion configured to determine a set of emission constraints associated with emission optimization for an industrial domain related to one or more industrial processes that produce one or more industrial process products. In one or more embodiments, the computer-readable program code portions also comprise an executable portion configured to configure an emission optimization model based at least in part on the set of emission constraints and at least one other non-emission constraint. In one or more embodiments, the computer-readable program code portions also comprise an executable portion configured to receive an emission optimization request to optimize carbon emissions related to the one or more industrial processes. In one or more embodiments, the computer-readable program code portions also comprise an executable portion configured to, in response to the emission optimization request, apply the emission optimization model to real-time measurement data associated with the one or more industrial processes to determine one or more operational modifications for the one or more industrial processes that at least satisfy the set of emission constraints and optimize the at least one non-emission constraint, wherein at least a portion of the real-time measurement data are captured by a set of sensors configured to monitor real-time emissions related to the one or more industrial processes. In one or more embodiments, the computer-readable program code portions also comprise an executable portion configured to, in response to the emission optimization request and based on the one or more operational modifications, perform one or more actions associated with the one or more industrial processes, and transmit a control signal configured based on the one or more operational modifications to a controller associated with the one or more industrial processes.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an exemplary networked computing system environment, in accordance with one or more embodiments described herein;
FIG. 2 illustrates a schematic block diagram of a framework of an IoT platform of the networked computing system, in accordance with one or more embodiments described herein;
FIG. 3 illustrates a system that provides an exemplary emission optimization computer system, in accordance with one or more embodiments described herein;
FIG. 4 illustrates an exemplary emission optimization model, in accordance with one or more embodiments described herein;
FIG. 5 illustrates a system associated with a controller, in accordance with one or more embodiments described herein;
FIG. 6 illustrates an exemplary emission optimization pathway, in accordance with one or more embodiments described herein;
FIG. 7 illustrates a system that includes one or more data capture devices capable of capturing one or more portions of measurement data, in accordance with one or more embodiments described herein;
FIG. 8 illustrates a flow diagram for providing emission optimization for industrial processes, in accordance with one or more embodiments described herein; and
FIG. 9 illustrates a functional block diagram of a computer that may be configured to execute techniques described in accordance with one or more embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

In one or more embodiments, the present disclosure provides for an "Internet-of-Things" or "IoT" platform for industrial process control and/or industrial process optimization that uses real-time accurate models and/or real-time control for sustained optimization of emissions and/or decarbonization related to industrial processes and/or industrial assets. The IoT platform is an extensible platform that is portable for deployment in any cloud or data center environment for providing an enterprise-wide, top to bottom control of industrial processes and/or industrial assets. Further, the IoT platform of the present disclosure supports end-to-end capability to execute models against process data and/or to translate the output into actionable insights and/or real-time control to optimize emissions and/or decarbonization related to industrial processes and/or industrial assets, as detailed in the following description.

Industrial processes are often managed using industrial control systems . However, traditional industrial control systems typically utilize historical data and/or static control measures to manage emissions related to industrial processes that is open-looped. Additionally, emissions calculations used for optimization, asset planning including capital investment and reporting related to industrial processes typically rely on simulation-based approach which includes theoretical calculations and/or emission estimates for a single point in time. As result, actual emissions versus calculated emissions for an industrial process may differ by as much as +/-500%. Reduction benefits dilutive overtime and misaligned with overarching industrial performance goals including financial and emissions management. Accordingly, typical industrial processes are often executed in an inefficient and/or undesirable manner, especially with respect to emissions. For example, execution and/or changes to industrial processes and/or control systems are typically conducted through single variable or select traditional multi-variable optimization methods that require manual intervention by a user. The current optimization methods often do not take in account internal and external uncertainty factors (e.g., shift in regulations, changing emissions accounting methodologies, technology landscape changes, associated adjacent, enabling infrastructure and sources etc.) over a long-term time frame (e.g., 10-15 years). Furthermore, the current approach to variable optimizations methods is often open-loop and applied to a single process unit, a specific process, and/or a sub section of a single site. Current emissions management approach of measure-monitor-reduce is applied to current process. Few companies plan and/or take into account emissions implication resulting from growth strategies requiring operational expansions new asset acquisitions, new product line introductions, regulatory changes, feedstock and other process material changes due to changing market needs, implementation of digital and autonomous capabilities and incremental emissions due as a result of implementing emissions management systems and technologies requiring incremental power. It is therefore advantageous to optimize an industrial process via closed loop, automated, and/or real-time process management includes a long-term multi-variable planning algorithm with a problem formulation that incorporates all the important factors can identify the most optimal pathways to ensure effective emissions management specific users operating context and performance objectives cross-site, cross-different assets and at an aggregated enterprise level.

Thus, to address these and/or other issues, emission optimization for industrial processes is provided. In one or more embodiments, the emission optimization can include emission scenario planning and/or emission scenario execution for industrial processes. In one or more embodiments, an industrial process is optimized via closed loop, automated, and/or real-time industrial process management. The emission optimization disclosed herein can employ single-variable objectives and/or simultaneous multi-variable objectives to direct the emission optimization via closed loop scenarios over certain periods of time for planning, optimization, management and/or execution related to industrial processes. In one or more embodiments, an industrial process is integrated with measurement, management, and/or planning tools for emission optimization to provide evaluation, planning and/or execution of emission management and/or industrial process automation.

In one or more embodiments, the emission optimization disclosed herein enables modification of operational effects related to emissions and leak detection to reduce the impact of carbon emissions and/or to satisfy emission compliance requirements. In one or more embodiments, the emission optimization disclosed herein is based on domain-specific optimized pre-inputs and/or automated external inputs. Additionally, the emission optimization disclosed herein is a digital solution that utilizes multivariable inputs from internal and/or external sources that can be repeatedly updated based on real-time industrial process operations.

In one or more embodiments, the emission optimization disclosed herein is additionally or alternatively based on a set of emission objectives, a set of emission constraints, real-time input data and/or static input data to obtain emission management goals for industrial processes. The real-time input data can be automatically received, collected, and/or extracted from one or more data sources and/or can dynamically change over time based on operation of industrial processes. Examples of real-time input data include, but not limited to, process data, measurement data, sensor data, camera data, market data (e.g., cost of natural gas, electricity, green hydrogen, interest rates, etc.), and/or other real-time data. The static input data can be manually entered by a user and/or can be constant over time. The static input data can additionally or alternatively be updated by a user. Examples of static input data include, but not limited to, annual emissions data, project quote data, a number of resources, and/or other static data.

In one more embodiments, a model is utilized to provide the emission optimization. The model can be an algorithmic model, a statistical model, a machine learning model, or another type of model configured to provide insights, predictions, and/or recommendations related to emission optimization. In one or more embodiments, the model is automatically configured to update and/or otherwise learn as real-time input data changes over time. In one or more embodiments, the real-time input data and/or the static input data can be provided as input to the model.

Additionally, the model can process the real-time input data and/or the static input data within the set of emission objectives and/or the set of emission constraints to output an emissions management path related to modification of process automation and/or controls for one or more industrial processes. The emissions management path provided by the model can additionally or alternatively be related to modification of operational planning activities for one or more industrial process.

In one or more embodiments, multi-variable inputs related to industrial assets and/or industrial processes are aggregated according to an industrial domain to provide aggregated multi-variable data. The aggregated multi-variable data can be provided as input to the model to provide an optimized emissions management pathway for the industrial domain based on a set of emission objectives and/or a set of emission constraints. In various embodiments, the model can quantify associated risks and/or uncertainties including impact on variables (e.g., interdependency and/or dependency impact on variables). Additionally or alternatively, in one or more embodiments, real-time market data is monitored and provided as input to the model to facilitate determination of the optimized emissions management pathway for the industry domain. In certain embodiments, the optimized emissions management pathway can be communicated to an enterprise resource planning (ERP) system and/or a control system (e.g., an operational control system) to initiate one or more adjustments with respect to one or more industrial processes to provide optimized emissions related to the one or more industrial processes. Additionally or alternatively, the one or more adjustments can be provided to an emissions management historian and/or a master decarbonization historian to facilitate future adjustments to industrial processes and/or adjustments to the model, enabling increased transparency for audition and/or a "say-do ratio" loop to reduce emission inaccuracies for an industrial domain and/or to improve emissions management credibility while also improving alignment with regulatory and compliance requirements to capture emission incentives and/or to generate machine readable reports related to emissions.

In one or more embodiments, a real-time feedback loop for reliable emissions control and/or management is provided via a two layered continuous gas emissions monitoring and measurement system. For example, the gas emissions monitoring and measurement system can include a mesh network of point measurement gas sensors, a weather monitoring system, and/or a set of gas cloud imaging (GCI) cameras associated with hyperspectral imaging technology. The respective point measurement gas sensors can be positioned within an industrial facility in close proximity to potential leak sources. Additionally, based on a combination of data streams associated with the point measurement gas sensors, gas emissions related to respective industrial asset components at the industrial facility can be measured in real-time. The measurements related to the gas emissions can then be utilized to evaluate total emissions at the industrial facility via a summation of all of emission sources. The GCI cameras can be positioned separate from industrial components monitoring for total emissions related to the industrial facility in order to determine gross emissions from all of the industrial components in real-time. Additionally or alternatively, in some embodiments, the results from the model are stored and/otherwise maintained in a manner usable as input to the model. In this regard, embodiments of the present disclosure may determine and/or otherwise utilize previous results from the model, as well as subsequent portion(s) of captured input data, to determine the effectiveness of the results outputted by the model (e.g., modifications to perform to optimize particular target parameter(s)) to determine whether implemented results were effective, more effective, or less expected than previous determined in affecting the target parameters for optimization.

Accordingly, accuracy of gas emission calculations, or equivalents of gas emissions, for an industrial facility can be improved and/or performance of one or more industrial processes related to the industrial facility can be improved. Moreover, by employing one or more techniques disclosed herein, industrial process efficiency can be optimized in a myriad of manners that satisfy particular constraints, and optimize multiple parameters simultaneously (e.g., emissions reduction together with overall cost over a particular time interval). Additionally, in one or more embodiments, performance of a processing system (e.g., a control system) associated with an industrial process is improved by employing one or more techniques disclosed herein. For example, in one or more embodiments, a number of computing resources, a number of a storage requirements, and/or number of errors associated with a processing system (e.g., a control system) for an industrial process is reduced by employing one or more techniques disclosed herein.

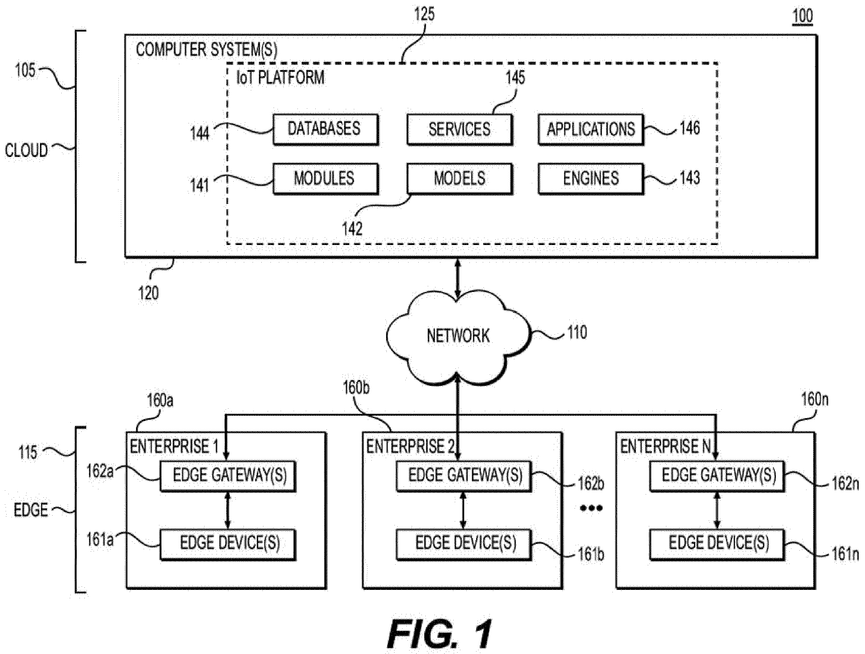

FIG. 1 illustrates an exemplary networked computing system environment 100, according to the present disclosure. As shown in FIG. 1, networked computing system environment 100 is organized into a plurality of layers including a cloud 105, a network 110, and an edge 115. As detailed further below, components of the edge 115 are in communication with components of the cloud 105 via the network 110. In one or more embodiments, the cloud 105 is a cloud layer, the network 110 is a network layer, and/or the edge 115 is an edge layer.

In various embodiments, network 110 is any suitable network or combination of networks and supports any appropriate protocol suitable for communication of data to and from components of the cloud 105 and between various other components in the networked computing system environment 100 (e.g., components of the edge 115). According to various embodiments, network 110 includes a public network (e.g., the Internet), a private network (e.g., a network within an organization), or a combination of public and/or private networks. According to various embodiments, network 110 is configured to provide communication between various components depicted in FIG. 1. According to various embodiments, network 110 comprises one or more networks that connect devices and/or components in the network layout to allow communication between the devices and/or components. For example, in one or more embodiments, the network 110 is implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 is implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "IoT" platform 125. It should be appreciated that "IoT platform" is an optional term describing a platform connecting any type of Internet-connected device, and should not be construed as limiting on the types of computing systems useable within IoT platform 125. In particular, in various embodiments, computer systems 120 includes any type or quantity of one or more processors and one or more data storage devices comprising memory for storing and executing applications or software modules of networked computing system environment 100. In one embodiment, the processors and data storage devices are embodied in server-class hardware, such as enterprise-level servers. For example, in an embodiment, the processors and data storage devices comprises any type or combination of application servers, communication servers, web servers, super-computing servers, database servers, file servers, mail servers, proxy servers, and/ virtual servers. Further, the one or more processors are configured to access the memory and execute processor-readable instructions, which when executed by the processors configures the processors to perform a plurality of functions of the networked computing system environment 100.

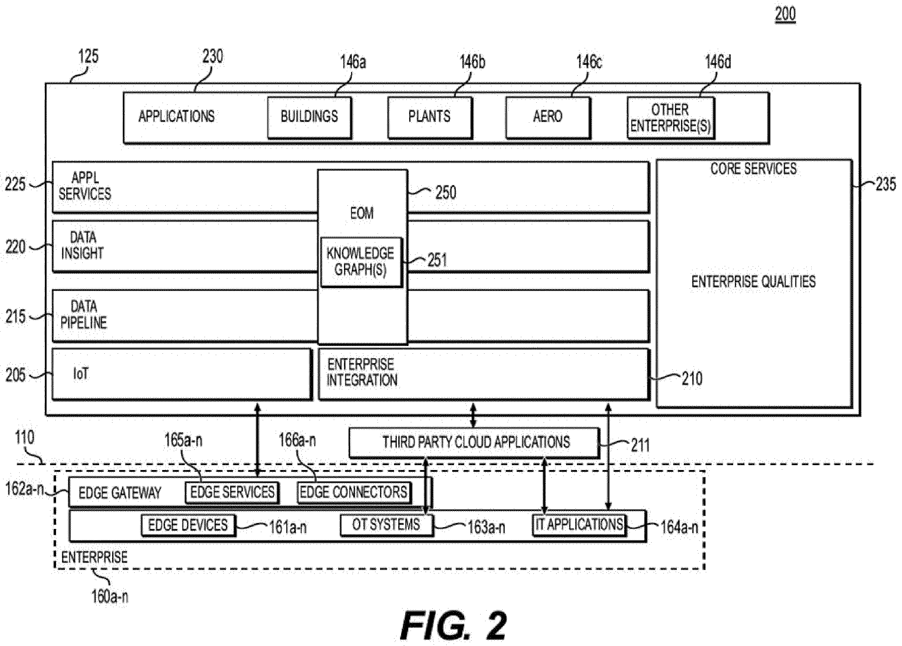

Computer systems 120 further include one or more software components of the IoT platform 125. For example, in one or more embodiments, the software components of computer systems 120 include one or more software modules to communicate with user devices and/or other computing devices through network 110. For example, in one or more embodiments, the software components include one or more modules 141, models 142, engines 143, databases 144, services 145, and/or applications 146, which may be stored in/by the computer systems 120 (e.g., stored on the memory), as detailed with respect to FIG. 2 below. According to various embodiments, the one or more processors are configured to utilize the one or more modules 141, models 142, engines 143, databases 144, services 145, and/or applications 146 when performing various methods described in this disclosure.

Accordingly, in one or more embodiments, computer systems 120 execute a cloud computing platform (e.g., IoT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 are combined to form fewer modules, models, engines, databases, services, and/or applications. In some embodiments, some of the modules 141, models 142, engines 143, databases 144, services 145, and/or applications 146 are separated into separate, more numerous modules, models, engines, databases, services, and/or applications. In some embodiments, some of the modules 141, models 142, engines 143, databases 144, services 145, and/or applications 146 are removed while others are added.

The computer systems 120 are configured to receive data from other components (e.g., components of the edge 115) of networked computing system environment 100 via network 110. Computer systems 120 are further configured to utilize the received data to produce a result. According to various embodiments, information indicating the result is transmitted to users via user computing devices over network 110. In some embodiments, the computer systems 120 is a server system that provides one or more services including providing the information indicating the received data and/or the result(s) to the users. According to various embodiments, computer systems 120 are part of an entity which include any type of company, organization, or institution that implements one or more IoT services. In some examples, the entity is an IoT platform provider.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n represent any type of entity, facility, or vehicle that includes processing units, industrial assets and/or industrial processes capable of producing emissions (e.g., gas emissions), such as, for example, industrial facilities, processing plant facilities, manufacturing facilities, oil and gas facilities (e.g., oil refineries), chemical processing facilities (e.g., metal refinery, alumina refinery, etc.), lubricant industrial plants, buildings, warehouses, real estate facilities, laboratories, companies, divisions, aircrafts, spacecrafts, automobiles, ships, boats, vehicles, or any other type of entity, facility, and/or vehicle that includes any number of local devices. Furthermore, the processing units, industrial assets and/or industrial processes associated with the enterprises 160a-160n may transform, manipulate, and/or otherwise interact with input ingredients to yield a final product.

According to various embodiments, the edge devices 161a-161n represent any of a variety of different types of devices that may be found within the enterprises 160a-160n. Edge devices 161a-161n are any type of device configured to access network 110, or be accessed by other devices through network 110, such as via an edge gateway 162a-162n. According to various embodiments, edge devices 161a-161n may include "IoT devices" which include any type of network-connected (e.g., Internet-connected) device that monitor operations of a particular processing unit. For example, in one or more embodiments, the edge devices 161a-161n include sensors, cameras, units, gas monitoring devices, gas leak sensing devices, gas cloud imaging devices, flanges, pressure relief devices, pumps, burners, boilers, storage tanks, air handler units, fans, actuators, valves, ducts, processors, computers, vehicle components, drone components, satellite components, displays, HVAC components, industrial equipment, factory equipment, refinery equipment, and/or any other devices that are connected to the network 110 via one or more techniques for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, in one or more embodiments, the edge 115 include operational technology (OT) systems 163a-163n and information technology (IT) applications 164a-164n of each enterprise 160a-160n. The OT systems 163a-163n include hardware and software for detecting and/or causing a change, through the direct monitoring and/or control of industrial equipment (e.g., edge devices 161a-161n), assets, processes, and/or events. The IT applications 164a-164n includes network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. According to various embodiments, the communication interfaces of the edge gateways 162a-162n include one or more cellular radios, Bluetooth, WiFi, near-field communication radios, Ethernet, or other appropriate communication devices for transmitting and receiving information. According to various embodiments, multiple communication interfaces are included in each gateway 162a-162n for providing multiple forms of communication between the edge devices 161a-161n, the gateways 162a-162n, and the cloud 105 via network 110. For example, in one or more embodiments, communication are achieved with the edge devices 161a-161n and/or the network 110 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

According to various embodiments, the edge gateways 162a-162n also include a processor and memory for storing and executing program instructions to facilitate data processing. For example, in one or more embodiments, the edge gateways 162a-162n are configured to receive data from the edge devices 161a-161n and process the data prior to sending the data to the cloud 105. Accordingly, in one or more embodiments, the edge gateways 162a-162n include one or more software modules or components for providing data processing services and/or other services or methods of the present disclosure. With reference to FIG. 2, each edge gateway 162a-162n includes edge services 165a-165n and edge connectors 166a-166n. According to various embodiments, the edge services 165a-165n include hardware and software components for processing the data from the edge devices 161a-161n. According to various embodiments, the edge connectors 166a-166n include hardware and software components for facilitating communication between the edge gateway 162a-162n and the cloud 105 via network 110, as detailed above. In some cases, any of edge devices 161a-n, edge connectors 166a-n, and edge gateways 162a-n have their functionality combined, omitted, or separated into any combination of devices. In other words, an edge device and its connector and gateway need not necessarily be discrete devices.

FIG. 2 illustrates a schematic block diagram of framework 200 of the IoT platform 125, according to the present disclosure. The IoT platform 125 of the present disclosure is a platform for plantwide optimization that uses real-time accurate models and/or real-time data to deliver intelligent actionable recommendations and/or real-time control for sustained peak performance of the enterprise 160a-160n. The IoT platform 125 is an extensible platform that is portable for deployment in any cloud or data center environment for providing an enterprise-wide, top to bottom view, displaying the status of processes, assets, people, and safety. Further, the IoT platform 125 supports end-to-end capability to execute one or more emission optimization models against measurement data and to translate the output into actionable insights related to optimizing emissions, using the framework 200, detailed further below.

As shown in FIG. 2, the framework 200 of the IoT platform 125 comprises a number of layers including, for example, an IoT layer 205, an enterprise integration layer 210, a data pipeline layer 215, a data insight layer 220, an application services layer 225, and an applications layer 230. The IoT platform 125 also includes a core services layer 235 and an extensible object model (EOM) 250 comprising one or more knowledge graphs 251. The layers 205-235 further include various software components that together form each layer 205-235. For example, in one or more embodiments, each layer 205-235 includes one or more of the modules 141, models 142, engines 143, databases 144, services 145, applications 146, or combinations thereof. In some embodiments, the layers 205-235 are combined to form fewer layers. In some embodiments, some of the layers 205-235 are separated into separate, more numerous layers. In some embodiments, some of the layers 205-235 are removed while others may be added.

The IoT platform 125 is a model-driven architecture. Thus, in certain embodiments, the extensible object model 250 communicates with each layer 205-230 to contextualize site data of the enterprise 160a-160n using an extensible object model (or "asset model") and knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 include resource description framework (RDF) graphs. As used herein, a "RDF graph" is a graph data model that formally describes the semantics, or meaning, of information. The RDF graph also represents metadata (e.g., data that describes data). According to various embodiments, knowledge graphs 251 also include a semantic object model. The semantic object model is a subset of a knowledge graph 251 that defines semantics for the knowledge graph 251. For example, the semantic object model defines the schema for the knowledge graph 251.

As used herein, EOM 250 is a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, in one or more embodiments, the model describes the type of sensors mounted on any given asset (e.g., edge device 161a-161n) and the type of data that is being sensed by each sensor. According to various embodiments, a key performance indicator (KPI) framework is used to bind properties of the assets in the extensible object model 250 to inputs of the KPI framework. Accordingly, the IoT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the IoT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the IoT platform 125 so that the corresponding applications 146 understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 251 can automatically map the tag to the attribute based on naming conventions, parsing, and matching the tag and attribute descriptions and/or by comparing the behavior of the time series data with expected behavior.

In certain embodiments, the modeling phase includes an onboarding process for syncing the models between the edge 115 and the cloud 105. For example, in one or more embodiments, the onboarding process includes a simple onboarding process, a complex onboarding process, and/or a standardized rollout process. The simple onboarding process includes the knowledge graph 251 receiving raw model data from the edge 115 and running context discovery algorithms to generate the model. The context discovery algorithms read the context of the edge naming conventions of the edge devices 161a-161n and determine what the naming conventions refer to. For example, in one or more embodiments, the knowledge graph 251 receives "TMP" during the modeling phase and determine that "TMP" relates to "temperature." The generated models are then published. In certain embodiments, the complex onboarding process includes the knowledge graph 251 receiving the raw model data, receiving point history data, and receiving site survey data. According to various embodiments, the knowledge graph 251 then uses these inputs to run the context discovery algorithms. According to various embodiments, the generated models are edited and then the models are published. The standardized rollout process includes manually defining standard models in the cloud 105 and pushing the models to the edge 115. For example, in some embodiments, a user inputs connections and/or device(s) embodying processing unit(s) of a particular enterprise to define the layout of the enterprise for further processing.

The IoT layer 205 includes one or more components for device management, data ingest, and/or command/control of the edge devices 161a-161n. The components of the IoT layer 205 enable data to be ingested into, or otherwise received at, the IoT platform 125 from a variety of sources. For example, in one or more embodiments, data is ingested from the edge devices 161a-161n through process historians or laboratory information management systems. The IoT layer 205 is in communication with the edge connectors 165a-165n installed on the edge gateways 162a-162n through network 110, and the edge connectors 165a-165n send the data securely to the IoT platform 205. In some embodiments, only authorized data is sent to the IoT platform 125, and the IoT platform 125 only accepts data from authorized edge gateways 162a-162n and/or edge devices 161a-161n. According to various embodiments, data is sent from the edge gateways 162a-162n to the IoT platform 125 via direct streaming and/or via batch delivery. Further, after any network or system outage, data transfer will resume once communication is re-established and any data missed during the outage will be backfilled from the source system or from a cache of the IoT platform 125. According to various embodiments, the IoT layer 205 also includes components for accessing measurements, time series data, alarms, vents, and/or transactional data via a variety of protocols.

The enterprise integration layer 210 includes one or more components for events/messaging, file upload, and/or REST/OData. The components of the enterprise integration layer 210 enable the IoT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the IoT platform 125. The enterprise integration layer 210 also enables the IoT platform 125 to communicate with the OT systems 163a-163n and IT applications 164a-164n of the enterprise 160a-160n. Thus, the enterprise integration layer 210 enables the IoT platform 125 to receive data from the third-party applications 211 rather than, or in combination with, receiving the data from the edge devices 161a-161n directly.

The data pipeline layer 215 includes one or more components for data cleansing/enriching, data transformation, data calculations/aggregations, and/or API for data streams. Accordingly, in one or more embodiments, the data pipeline layer 215 pre-processes and/or performs initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, in one or more embodiments, cleansed data is run through enterprise-specific digital twins. According to various embodiments, the enterprise-specific digital twins include a reliability advisor containing process models to determine the current operation and the fault models to trigger any early detection and determine an appropriate resolution. According to various embodiments, the digital twins also include an optimization advisor that integrates real-time economic data with real-time process data, selects the right feed for a process, and determines optimal process conditions and product yields.

According to various embodiments, the data pipeline layer 215 employs models and templates to define calculations and analytics. Additionally or alternatively, according to various embodiments, the data pipeline layer 215 employs models and templates to define how the calculations and analytics relate to the assets (e.g., the edge devices 161a-161n). For example, in an embodiment, a fan template defines fan efficiency calculations such that every time a fan is configured, the standard efficiency calculation is automatically executed for the fan. The calculation model defines the various types of calculations, the type of engine that should run the calculations, the input and output parameters, the preprocessing requirement and prerequisites, the schedule, etc. According to various embodiments, the actual calculation or analytic logic is defined in the template or it may be referenced. Thus, according to various embodiments, the calculation model is employed to describe and control the execution of a variety of different process models. According to various embodiments, calculation templates are linked with the asset templates such that when an asset (e.g., edge device 161a-161n) instance is created, any associated calculation instances are also created with their input and output parameters linked to the appropriate attributes of the asset (e.g., edge device 161a-161n).

According to various embodiments, the IoT platform 125 supports an emission optimization model including, for example, a curve fitting model, a regression analysis model, a first principles model, an empirical model, an engineered model, a user-defined model, a machine learning model, built-in functions, and/or any other type of analytics model to provide emission optimization related to industrial assets and/or industrial processes.

An emission optimization model may be used to compare current and/or predicted enterprise 160a-160n measurements, market data, and/or static configuration data to identify and/or driver emission optimization opportunities.

According to various embodiments, when an emission optimization opportunity is identified, the IoT platform 125 provides recommendations about optimal corrective actions to take. Initially, the recommendations are based on expert knowledge that has been pre-programmed into the system by process and equipment experts. A recommendation services module presents this information in a consistent way regardless of source, and supports workflows to track, close out, and document the recommendation follow-up. According to various embodiments, the recommendation follow-up is employed to improve the overall knowledge of the system over time as existing recommendations are validated (or not) or new cause and effect relationships are learned by users and/or analytics. According to various embodiments, the models are used to accurately predict what will occur before it occurs and interpret the status of the installed base. Thus, the IoT platform 125 enables operators to quickly initiate emission optimization measures.

According to various embodiments, machine learning methods are applied to train models for emission optimization prediction. According to various embodiments, predictive emission optimization maintenance leverages FDD-based algorithms to continuously monitor individual control and equipment performance for emission optimization. Emission optimization maintenance includes determining an optimal operating option and when it should be performed based on actual conditions rather than time-based maintenance schedule. According to various embodiments, emission optimization analysis selects the right solution based on the company's capital, operational, and/or other requirements. Emission optimization may include determining optimal conditions via adjusting set-points and schedules. The optimized set-points and schedules can be communicated directly to the underlying controllers, which enables automated closing of the loop from analytics to control.

The data insight layer 220 includes one or more components for time series databases (TDSB), relational/document databases, data lakes, blob, files, images, and videos, and/or an API for data query. According to various embodiments, when raw data is received at the IoT platform 125, the raw data is stored as time series tags or events in warm storage (e.g., in a TSDB) to support interactive queries and to cold storage for archive purposes. According to various embodiments, data is sent to the data lakes for offline analytics development. According to various embodiments, the data pipeline layer 215 accesses the data stored in the databases of the data insight layer 220 to perform analytics, as detailed above.

The application services layer 225 includes one or more components for rules engines, workflow/notifications, KPI framework, insights (e.g., actionable insights), decisions, recommendations, machine learning, and/or an API for application services. The application services layer 225 enables building of applications 146a-d. The applications layer 230 includes one or more applications 146a-d of the IoT platform 125. For example, according to various embodiments, the applications 146a-d includes a buildings application 146a, a plants application 146b, an aero application 146c, and other enterprise applications 146d. According to various embodiments, the applications 146 includes general applications for portfolio management, asset management, autonomous control, and/or any other custom applications. According to various embodiments, portfolio management includes the KPI framework and a flexible user interface (UI) builder. According to various embodiments, asset management includes asset performance, asset health, and/or asset predictive maintenance. According to various embodiments, autonomous control includes emission optimization, plantwide optimization, energy optimization and/or predictive maintenance. As detailed above, according to various embodiments, the general applications 146 is extensible such that each application 146 is configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the IoT platform 125. According to various embodiments, the core services 235 include data visualization, data analytics tools, security, scaling, and monitoring. According to various embodiments, the core services 235 also include services for tenant provisioning, single login/common portal, self-service admin, UI library/UI tiles, identity/access/entitlements, logging/monitoring, usage metering, API gateway/dev portal, and the IoT platform 125 streams.

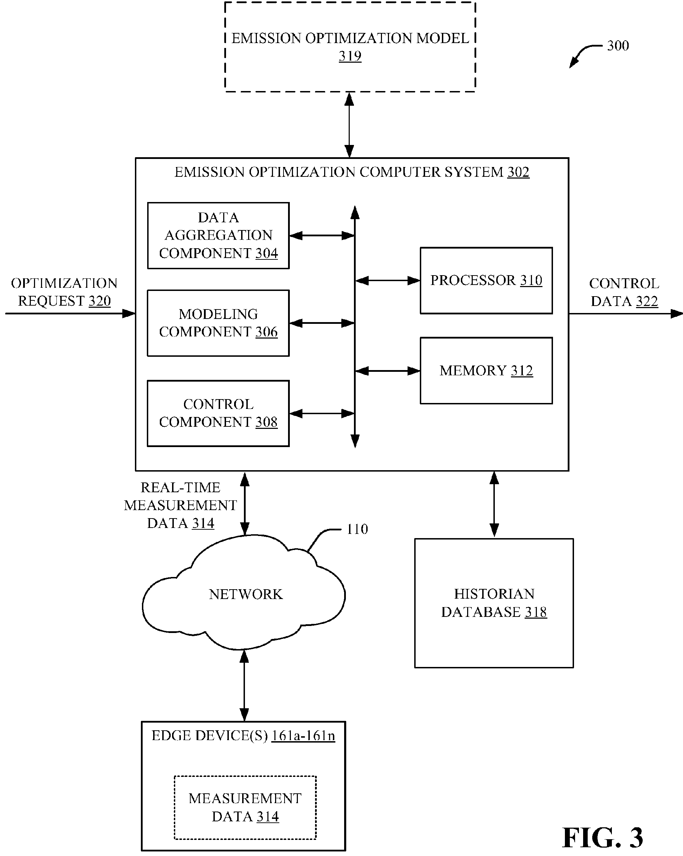

FIG. 3 illustrates a system 300 that provides an exemplary environment according to one or more described features of one or more embodiments of the disclosure. According to one or more embodiments, the system 300 includes an emission optimization computer system 302 to facilitate a practical application of data analytics technology and/or digital transformation technology to provide optimization of emissions related to industrial processes and/or industrial assets. In one or more embodiments, the emission optimization computer system 302 stores and/or analyzes data that is aggregated from one or more industrial assets and/or one or more data sources associated with an an industrial system such as, for example, an industrial facility. Additionally, in one or more embodiments, the emission optimization computer system 302 provides insights, predictions, and/or recommendations related to optimizing emissions using data preprocessing, data augmentation, and/or modeling.

In an embodiment, the emission optimization computer system 302 is a server system (e.g., a server device) that facilitates a data analytics platform between one or more industrial assets, one or more industrial processes, and/or an industrial facility. In one or more embodiments, the emission optimization computer system 302 is a device with one or more processors and a memory. In one or more embodiments, the emission optimization computer system 302 is a computer system from the computer systems 120. For example, in one or more embodiments, the emission optimization computer system 302 is implemented via the cloud 105. The emission optimization computer system 302 is also related to one or more technologies, such as, for example, emission management technologies, decarbonization technologies, industrial technologies, Internet of Things (IoT) technologies, data modeling technologies, data analytics technologies, digital transformation technologies, cloud computing technologies, cloud database technologies, server technologies, network technologies, enterprise technologies, connected building technologies, private enterprise network technologies, wireless communication technologies, machine learning technologies, artificial intelligence technologies, digital processing technologies, electronic device technologies, computer technologies, aircraft technologies, oil and gas technologies, petrochemical technologies, refinery technologies, process plant technologies, procurement technologies, and/or one or more other technologies.

Moreover, the emission optimization computer system 302 provides an improvement to one or more technologies such as emission management technologies, decarbonization technologies, industrial technologies, IoT technologies, data modeling technologies, data analytics technologies, digital transformation technologies, cloud computing technologies, cloud database technologies, server technologies, network technologies, enterprise technologies, connected building technologies, private enterprise network technologies, wireless communication technologies, machine learning technologies, artificial intelligence technologies, digital processing technologies, electronic device technologies, computer technologies, aircraft technologies, oil and gas technologies, petrochemical technologies, refinery technologies, process plant technologies, procurement technologies, and/or one or more other technologies. In an implementation, the emission optimization computer system 302 improves performance of one or more industrial assets, one or more industrial processes, and/or an industrial facility. Additionally or alternatively, the emission optimization computer system 302 improves performance of a computing device. For example, in one or more embodiments, the emission optimization computer system 302 improves processing efficiency of a computing device (e.g., a server), reduces power consumption of a computing device (e.g., a server), improves quality of data provided by a computing device (e.g., a server), etc.

The emission optimization computer system 302 includes a data aggregation component 304, a modeling component 306 and/or a control component 308. Additionally, in one or more embodiments, the emission optimization computer system 302 includes a processor 310 and/or a memory 312. In certain embodiments, one or more aspects of the emission optimization computer system 302 (and/or other systems, apparatuses and/or processes disclosed herein) constitute executable instructions embodied within a computer-readable storage medium (e.g., the memory 312). For instance, in an embodiment, the memory 312 stores computer executable component and/or executable instructions (e.g., program instructions). Furthermore, the processor 310 facilitates execution of the computer executable components and/or the executable instructions (e.g., the program instructions). In an example embodiment, the processor 310 is configured to execute instructions stored in the memory 312 or otherwise accessible to the processor 310.

The processor 310 is a hardware entity (e.g., physically embodied in circuitry) capable of performing operations according to one or more embodiments of the disclosure. Alternatively, in an embodiment where the processor 310 is embodied as an executor of software instructions, the software instructions configure the processor 310 to perform one or more algorithms and/or operations described herein in response to the software instructions being executed. In an embodiment, the processor 310 is a single core processor, a multi-core processor, multiple processors internal to the emission optimization computer system 302, a remote processor (e.g., a processor implemented on a server), and/or a virtual machine. In certain embodiments, the processor 310 is in communication with the memory 312, the data aggregation component 304, the modeling component 306 and/or the control component 308 via a bus to, for example, facilitate transmission of data among the processor 310, the memory 312, the data aggregation component 304, the modeling component 306 and/or the control component 308. The processor 310 may be embodied in a number of different ways and, in certain embodiments, includes one or more processing devices configured to perform independently. Additionally or alternatively, in one or more embodiments, the processor 310 includes one or more processors configured in tandem via a bus to enable independent execution of instructions, pipelining of data, and/or multi-thread execution of instructions.

The memory 312 is non-transitory and includes, for example, one or more volatile memories and/or one or more non-volatile memories. In other words, in one or more embodiments, the memory 312 is an electronic storage device (e.g., a computer-readable storage medium). The memory 312 is configured to store information, data, content, one or more applications, one or more instructions, or the like, to enable the emission optimization computer system 302 to carry out various functions in accordance with one or more embodiments disclosed herein. As used herein in this disclosure, the term "component," "system," and the like, is a computer-related entity. For instance, "a component," "a system," and the like disclosed herein is either hardware, software, or a combination of hardware and software. As an example, a component is, but is not limited to, a process executed on a processor, a processor, circuitry, an executable component, a thread of instructions, a program, and/or a computer entity.

In an embodiment, the emission optimization computer system 302 (e.g., the data aggregation component 304 of the emission optimization computer system 302) receives measurement data 314 from the edge devices 161a-161n. The measurement data 314 can include one or more measurements, operational data, sensor data, real-time data, event data, industrial process data, and/or other data related to one or more edge devices from the edge devices 161a-161n. For example, the measurement data 314 can include one or more real-time measurements captured and/or provided by one or more sensors, one or more cameras, and/or one or more other data capture devices related to an industrial facility. The one or more sensors, the one or more cameras, and/or the one or more other data capture devices can be located within the industrial facility. Additionally or alternatively, the one or more sensors, the one or more cameras, and/or the one or more other data capture devices can be located in an outdoor environment proximate to the industrial facility. In one or more embodiments, at least a portion of the measurement data 314 corresponds to emission data related to the edge devices 161a-161n. For example, the measurement data 314 can include one or more measurements, operational data, sensor data, real-time data, event data, industrial process data, and/or other data related to emissions such as, for example, gas emissions, carbon emissions, carbon dioxide emissions, hydrocarbon emissions, nitrous oxide emissions, methane emissions, greenhouse gases, pollutants, and/or other emissions related to the edge devices 161a-161n.

In one or more embodiments, at least a portion of the measurement data 314 is associated with one or more industrial processes associated with the edge devices 161a-161n. For example, in one or more embodiments, at least a portion of the measurement data 314 is generated and/or employed by one or more industrial processes associated with the edge devices 161a-161n. The edge devices 161a-161n include, in one or more embodiments, one or more industrial assets, one or more sensors, one or more cameras, one or more IoT devices (e.g., one or more industrial IoT devices), one or more gas monitoring devices, one or more gas leak sensing devices, one or more gas cloud imaging devices, one or more databases associated with one or more industrial processes, one or more flanges, one or more pressure relief devices, one or more pumps, one or more burners, one or more boilers, one or more actuators, one or more processors, one or more computers, one or more valves, one or more motors, one or more compressors, one or more turbines, one or more ducts, one or more heaters, one or more chillers, one or more coolers, one or more furnaces, one or more heat exchangers, one or more fans, one or more blowers, one or more conveyor belts, one or more vehicle components, one or more displays, one or more HVAC components, industrial equipment, factory equipment, and/or one or more other devices that are connected to the network 110 for collecting, sending, and/or receiving information. In one or more embodiments, the edge device 161a-161n include, or is otherwise in communication with, one or more controllers for selectively controlling a respective edge device 161a-161n and/or for sending/receiving information between the edge devices 161a-161n and the emission optimization computer system 302 via the network 110. Additionally, one or more edge devices of the edge devices 161a-161n may be an emissions source and/or may monitor an emissions source that produces or potentially produces emissions. For example, emissions related to a burner and/or a boiler may be monitored via one or more sensors and/or one or more other data capture device configured for collecting, sending, and/or receiving information related to the burner and/or the boiler.

In certain embodiments, at least one edge device from the edge devices 161a-161n incorporates encryption capabilities to facilitate encryption of one or more portions of the measurement data 314. Additionally, in one or more embodiments, the emission optimization computer system 302 (e.g., the data aggregation component 304 of the emission optimization computer system 302) receives the measurement data 314 via the network 110. In one or more embodiments, the network 110 is a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network. In one or more embodiments, the edge devices 161a-161n are associated with an industrial environment (e.g., an industrial facility, etc.). Additionally or alternatively, in one or more embodiments, the edge devices 161a-161n are associated with components of the edge 115 such as, for example, one or more enterprises 160a-160n.

In one or more embodiments, the data aggregation component 304 aggregates the measurement data 314 from the edge devices 161a-161n. For instance, in one or more embodiments, the data aggregation component 304 can aggregate the measurement data 314 into a historian database 318. In certain embodiments, the data aggregation component 304 can aggregate the measurement data 314 into multivariate data related to the edge devices 161a-161n. For example, in one or more embodiments, the historian database 318 stores at least a portion of the measurement data 314 associated with two or more variables (e.g., two or more features) associated with the edge devices 161a-161n. The historian database 318 is a cache memory (e.g., a database structure) that dynamically stores the measurement data 314 based on interval of time, industrial process, industrial asset, and/or industrial domain. For instance, in one or more embodiments, the historian database 318 stores the measurement data 314 for one or more intervals of time (e.g., 1 minute to 12 minutes, 1 hour to 24 hours, 1 day to 31 days, 1 month to 12 months, etc.) and/or for one or more industrial assets. Additionally or alternatively, the historian database 318 may store data related to historical modification operations and/or work order data related to the edge devices 161a-161n and/or related industrial operations.

In one or more embodiments, the data aggregation component 304 repeatedly updates data of the historian database 318 in real-time or approximately in real-time based on the measurement data 314 provided by the edge devices 161a-161n. For instance, in one or more embodiments, the data aggregation component 304 can repeatedly store new data and/or modified data associated with the measurement data 314 during one or more intervals of time. In one or more embodiments, the data aggregation component 304 repeatedly scans the edge devices 161a-161n to determine new data for storage in the historian database 318.

In one or more embodiments, the data aggregation component 304 formats one or more portions of the measurement data 314. For instance, in one or more embodiments, the data aggregation component 304 provides a formatted version of the measurement data 314 to the historian database 318. In an embodiment, the formatted version of the measurement data 314 is formatted with one or more defined formats associated with the one or more intervals of time, one or more industrial assets, one or more industrial processes, and/or one or more industrial facilities. A defined format is, for example, a structure for data fields of the historian database 318. In various embodiments, the formatted version of the measurement data 314 is stored in the historian database 318. In one or more embodiments, the data aggregation component 304 groups data from the measurement data 314 based on corresponding features and/or attributes of the data. In one or more embodiments, the data aggregation component 304 groups data from the measurement data 314 based on corresponding identifiers (e.g., a matching industrial asset, a matching industrial process, a matching industrial facility, etc.) for the measurement data 314. In one or more embodiments, the data aggregation component 304 employs one or more locality-sensitive hashing techniques to group data from the measurement data 314 based on similarity scores and/or calculated distances between different data in the measurement data 314.

**In** one or more embodiments, the emission optimization computer system 302 (e.g., the modeling component 306 of the emission optimization computer system 302) receives an optimization request 320. The optimization request 320 can be utilized as a trigger to initiate modeling associated with an emission optimization model 319. The emission optimization model 319 can be communicatively coupled to or integrated within the emission optimization computer system 302 (e.g., the modeling component 306 of the emission optimization computer system 302). Additionally, the emission optimization computer system 302 (e.g., the modeling component 306 of the emission optimization computer system 302) can employ the emission optimization model 319 to provide emission optimization related to the edge devices 161a-161n. For example, the emission optimization computer system 302 (e.g., the modeling component 306 of the emission optimization computer system 302) can employ the emission optimization model 319 to provide emission optimization related to one or more industrial assets, one or more industrial processes, and/or one or more industrial facilities.

**In** one or more embodiments, the optimization request 320 is received in response to an action (e.g., a user-initiated action, modification of an interactive graphical element, etc.) initiated via an electronic interface of a computing device. In one or more embodiments, the optimization request 320 is received in response to an action initiated via a processing unit (e.g., an edge device, a controller, etc.) associated with the one or more industrial processes. In one or more embodiments, the optimization request 320 is received in response to a schedule for the one or more industrial processes satisfying a defined criterion (e.g., a schedule interval for the one or more industrial processes being above a threshold timer). In one or more embodiments, the optimization request 320 is received in response to detection of a possible emission inefficiency related to the one or more industrial processes (e.g., in response to an emissions index for the one or more industrial processes being greater than a specified threshold level). In one or more embodiments, the optimization request 320 is automatically received in response to another data-driven trigger.

The emission optimization model 319 is a model such as an algorithmic model, a statistical model (e.g., a regression model, a classification model, a clustering model, etc.), a machine learning model (e.g., a deep learning model, a neural network model, etc.), or another type of model configured to provide insights, predictions, and/or recommendations for the emission optimization related to the edge devices 161a-161n. In one or more embodiments, the emission optimization model 319 is configured based on a set of emission objectives and/or a set of emission constraints.

The set of emission objectives can include one or more objectives and/or one or more rules for the edge devices 161a-161n to reduce emissions related to one or more industrial assets, one or more industrial processes, and/or one or more industrial facilities. Additionally or alternatively, the modeling component 306 determines the set of emission objectives for the industrial domain related to the edge devices 161a-161n. For example, the set of emission objectives can include one or more baseline settings for the one or more industrial processes, one or more operational targets for the one or more industrial processes, one or more operational baseline thresholds for the one or more industrial processes, an emissions goal for the one or more industrial processes, a percentage of reduction in emissions for the one or more industrial processes, a cost savings objective related to the one or more industrial processes, and/or one or more other emission objectives.

The set of emission constraints can include a set of internal constraints related to the edge devices 161a-161n and/or a set of external constraints related to one or more external sources. For example, the set of internal constraints can include capital for an enterprise associated with the one or more industrial processes, resources available for the one or more industrial processes, an infrastructure for an industrial facility associated with the one or more industrial processes, risk tolerance rules for the one or more industrial processes, implementation timelines for achieving the emission optimization associated with the one or more industrial processes, and/or one or more other internal constraints. The set of external constraints can include regulatory information for a geographic location of an industrial facility associated with the one or more industrial processes, economic information for the geographic location, social information for the geographic location, technical information for an operating environment associated with the one or more industrial processes, legal information for the operating environment, environmental information for the geographic location or the operating environment, and/or one or more other external constraints.

In one or more embodiments, the modeling component 306 determines the set of emission constraints for an industrial domain related to the edge devices 161a-161n. For example, in one or more embodiments, the modeling component 306 determines the set of emission constraints for an industrial domain related to one or more industrial processes that produce one or more industrial process products. The industrial domain can correspond to an industrial facility, a set of industrial facilities, a subarea of an industrial facility, a geographic location associated with one or more industrial facilities, an enterprise, or another type of industrial domain. The modeling component 306 can determine the set of emission constraints based on user input received via a dashboard visualization rendered on a display of a user device, historical data stored in one or more historian databases, third-party data sources, and/or third-party systems. Additionally or alternatively, the modeling component 306 determines the set of emission constraints based at least in part on a set of operational baseline thresholds for the one or more industrial processes. The set of operational baseline thresholds can be a set of predicted baseline thresholds in order to maintain and/or optimize emissions related to the one or more industrial processes.

In one or more embodiments, the modeling component 306 configures the emission optimization model 319 based at least in part on the set of emission constraints and/or the set of emission objectives. For example, in an embodiment where the emission optimization model 319 is an algorithmic model or a statistical model, the modeling component 306 can configure variables, probability distributions, rules, and/or other parameters based on the set of emission constraints and/or the set of emission objectives. In another embodiment where the emission optimization model 319 is a machine learning model, the modeling component 306 can train the emission optimization model 319 based at least in part on the set of emission constraints and/or the set of emission objectives. For example, the modeling component 306 can determine and/or tune one or more parameters (e.g., one or more hyperparameters, one or more weights, etc.) for one or more learning processes associated with the emission optimization model 319 based at least in part on the set of emission constraints and/or the set of emission objectives.

In one or more embodiments, the optimization request 320 is a request to optimize carbon emissions related to the edge devices 161a-161n. For example, the optimization request 320 can be a request to optimize carbon emissions related to one or more industrial processes, one or more industrial assets, and/or one or more industrial facilities associated with an industrial domain. In one or more embodiments, in response to the optimization request 320, the modeling component 306 applies the emission optimization model 319 to at least a portion of the measurement data 314 to determine one or more operational modifications for the one or more industrial processes, the one or more industrial assets, and/or the one or more industrial facilities that satisfy the set of emission constraints and/or optimize at least one non-emission constraint. The at least one non-emission constraint can be related to constraints such as, but not limited to, capital constraints, regulatory constraints, economic constraints, social constraints, technical constraints, legal constraints, environmental constraints, and/or one or more other non-emission constraints that are unrelated to emissions provided by an industrial asset and/or an industrial process.

In one or more embodiments, the data aggregation component 304 captures at least a portion of the real-time measurement data via a set of sensors configured to monitor real-time emissions related to the one or more industrial processes. Furthermore, the modeling component 306 applies the emission optimization model 319 to the portion of the real-time measurement data associated with the set of sensors to determine the one or more operational modifications for the one or more industrial processes that satisfy the set of emission constraints and/or optimize at least one non-emission constraint. Additionally or alternatively, the data aggregation component 304 captures least a portion of the real-time measurement data via a set of gas cloud imaging cameras configured to monitor real-time emissions related to the one or more industrial processes. Furthermore, the modeling component 306 additionally or alternatively applies the emission optimization model 319 to the portion of the real-time measurement data associated with the set of gas cloud imaging cameras to determine the one or more operational modifications for the one or more industrial processes that satisfy the set of emission constraints and/or optimize at least one non-emission constraint. Additionally or alternatively, the data aggregation component 304 captures at least a portion of the real-time measurement data via a set of gas leak sensing devices configured to monitor for or predict gas leaks related to the one or more industrial processes. Furthermore, the modeling component 306 additionally or alternatively applies the emission optimization model 319 to the portion of the real-time measurement data associated with the set of gas leak sensing devices to determine the one or more operational modifications for the one or more industrial processes that satisfy the set of emission constraints and/or optimize at least one non-emission constraint. In some embodiments, the emissions constraints embody a first type of any number of different types of constraints, each constraint corresponding to a different parameter type utilized in optimization, as described herein.

In one or more embodiments, the data aggregation component 304 additionally or alternatively determines market data that comprises real-time gas prices for gas employed by the one or more industrial processes, real-time electricity prices associated with the one or more industrial processes, carbon credits available for a location associated with the industrial domain, real-time interest rate data associated with a banking system associated with the location, and/or other real-time market data. Furthermore, the modeling component 306 additionally or alternatively applies the emission optimization model 319 to the market data to determine the one or more operational modifications for the one or more industrial processes that satisfy the set of emission constraints and/or optimize at least one non-emission constraint. In one or more embodiments, the data aggregation component 304 additionally or alternatively determines static configuration data that includes resource data related to resource material employed by the one or more industrial processes, costs data related to costs associated with the one or more industrial processes, enterprise data related to assets for an enterprise associated with the one or more industrial processes, regulatory data related to regulatory incentives for a geographic location of an industrial facility associated with the one or more industrial processes, and/or other static configuration data. Furthermore, the modeling component 306 additionally or alternatively applies the emission optimization model 319 to the static configuration data to determine the one or more operational modifications for the one or more industrial processes that satisfy the set of emission constraints and/or optimize at least one non-emission constraint. In one or more embodiments, the data aggregation component 304 additionally or alternatively determines location data associated with a geographic location of an industrial facility associated with the one or more industrial processes

Based on the one or more operational modifications determined by the emission optimization model 319, the control component 308 performs one or more actions associated with the one or more industrial processes. The one or more actions can be triggered and/or described by control data 322 generated by the control component 308. For example, the control component 308 can transmit a control signal (e.g., a control signal represented by the control data 322) to a controller associated with the one or more industrial processes. The control signal can be configured based on the one or more operational modifications. For example, the control signal can include a control command to alter one or more operational settings for the one or more industrial processes in order to optimize emissions related to the one or more industrial processes. In one or more embodiments, the control component 308 transmits the control signal in response to a level of risk associated with the one or more operational modifications being below a defined risk threshold for the one or more industrial processes. In one or more embodiments, the control component 308 generates the control data 322 in response to a determination that the emission optimization model 319 yields a particular modification to reduce carbon emissions. For example, the control component 308 can generate the control data 322 in response to a determination that a certain reduction of carbon emissions and/or other carbon emissions criteria is achieved.

In an embodiment, an action from the one or more actions includes generating a user-interactive electronic interface that renders a visual representation of data associated with the one or more operational modifications. In another embodiment, an action from the one or more actions includes transmitting, to a computing device, one or more notifications associated with the one or more operational modifications. In another embodiment, an action from the one or more actions includes providing an optimal process condition for the one or more industrial processes based on the one or more operational modifications. For example, an action from the one or more actions includes adjusting a set-point and/or a schedule for the one or more industrial processes based on the one or more operational modifications. In another embodiment, an action from the one or more actions includes generating one or more work orders (e.g., one or more work order notifications) based on the one or more operational modifications.

In certain embodiments, an action from the one or more actions includes reconfiguring and/or retraining the emission optimization model 319 based on the one or more operational modifications. For example, in certain embodiments, one or more rules, one or more weights and/or one or more parameters for the emission optimization model 319 is updated based on the one or more operational modifications. In certain embodiments, an action from the one or more actions includes configuring a dashboard visualization (e.g., based on the one or more operational modifications) to provide individual control of the one or more industrial assets associated with the one or more industrial processes via the dashboard visualization. For example, in certain embodiments, the dashboard visualization is configured to receive input from a user to modify one or more parameters of one or more industrial assets based on a recommendation related to the one or more operational modifications. In another example, in certain embodiments, the dashboard visualization is configured to present a notification to allow acceptances of one or more changes related to one or more industrial assets in order to provide the one or more operational modifications with respect to the one or more industrial processes. In certain embodiments, an action from the one or more actions includes configuring the dashboard visualization (e.g., based on the one or more operational modifications) to facilitate creation of one or more work orders for the one or more industrial assets. In another embodiment, an action from the one or more actions includes an action associated with the application services layer 225, the applications layer 230, and/or the core services layer 235 based on the one or more operational modifications.

In certain embodiments, the control component 308 records data associated with the one or more operational modifications and/or related timestamp data in a decarbonization historian database. The data can be included in the control data 322. Additionally, the control component 308 can generate a work order notification for the one or more industrial processes based at least in part on the one or more operational modifications. In response to the one or more operational modifications being applied to the one or more industrial processes via the work order notification, the control component 308 can update the data in the decarbonization historian database based at least in part on the work order notification.

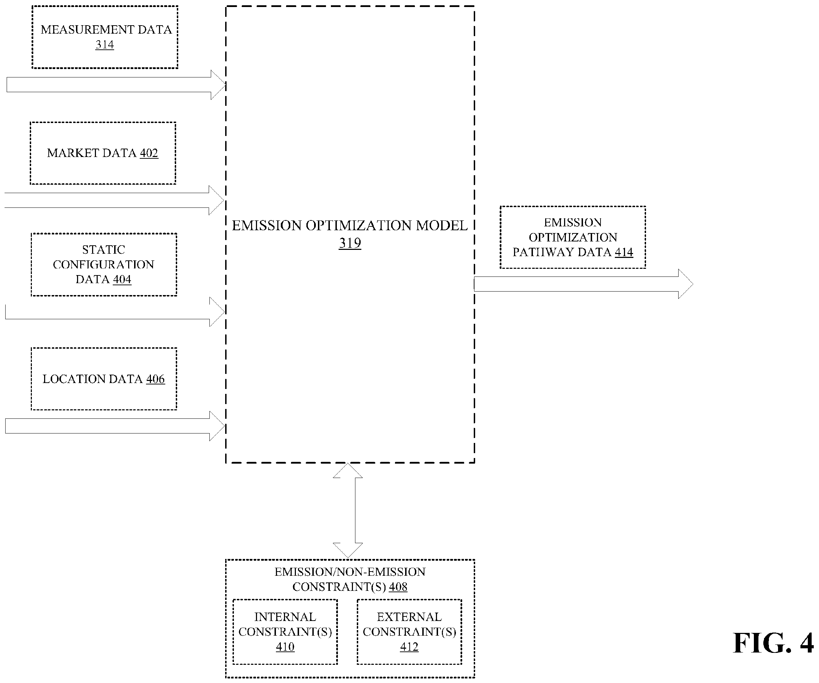

FIG. 4 illustrates the emission optimization model 319 according to one or more described features of one or more embodiments of the disclosure. According to one or more embodiments, the emission optimization model 319 receives measurement data 314, market data 402, static configuration data 404, and/or location data 406. The measurement data 314 and/or the market data 402 can be real-time data provided to the emission optimization model 319. Additionally, in one or more embodiments, the emission optimization model 319 is configured based on emission/non-emission constraint(s) 408. The emission/non-emission constraint(s) 408 include one or more emission constraints and/or one or more non-emission constraints. In various embodiments, the set of emission constraints included in the emission/non-emission constraints 408 can include constraints configured based on information related to predictions for operational settings, pre-optimized model input, switching to certain types of fuels for an industrial process and with respect to predicted emissions, etc. Additionally or alternatively, the set of emission constraints included in the emission/non-emission constraints 408 can include constraints related to risk mitigation factors, key indicators, and/or mitigation actions to minimize unplanned maintenance and/or process shutdown. In one or more embodiments, the emission/non-emission constraint(s) 408 include a set of internal constraints 410 and/or a set of external constraints 412. In one or more embodiments, modeling component 306 configures the emission optimization model 319 based at least in part on a set of emission constraints and at least one other non-emission constraint included in the emission/non-emission constraint(s) 408.

In an embodiment, the emission optimization model 319 is an algorithmic model and/or a statistical model such as, for example, a regression model, a classification model, a clustering model, or another type of model configured to provide emission optimization insights and/or recommendations related to the measurement data 314, the market data 402, the static configuration data 404, and/or the location data 406 according to the emission/non-emission constraint(s) 408 (e.g., the set of internal constraints 410 and/or the set of external constraints 412). In another embodiment, the emission optimization model 319 is a machine learning model such as, for example, a deep learning model, a neural network model, or another type of model configured to provide emission optimization insights, predictions and/or recommendations related to the measurement data 314, the market data 402, the static configuration data 404, and/or the location data 406 according to the emission/non-emission constraint(s) 408 (e.g., the set of internal constraints 410 and/or the set of external constraints 412).

The measurement data 314 includes one or more measurements (e.g., one or more real-time measurements) with respect to real-time emissions and/or real-time operations with respect to one or more industrial processes related to one or more industrial assets associated with one or more industrial facilities. In one or more embodiments, the measurement data 314 is electronically managed data representing operations of one or more industrial processes and/or one or more industrial assets within one or more industrial facilities. At least a portion of the measurement data 314 can be captured via a set of sensors, a set of gas cloud imaging cameras, a set of gas leak sensing devices, a set of weather monitoring devices, and/or one or more other data capture devices configured to monitor real-time emissions related to the one or more industrial processes. For example, the set of sensors, the set of gas cloud imaging cameras, the set of gas leak sensing devices, the set of weather monitoring devices, and/or the one or more other data capture devices can be positioned within an industrial facility such as, for example, in close proximity to potential leak sources, in close proximity or coupled to industrial assets, at one or more locations associated with one or more industrial processes, etc. Additionally or alternatively, the set of sensors, the set of gas cloud imaging cameras, the set of gas leak sensing devices, the set of weather monitoring devices, and/or the one or more other data capture devices can be positioned can be positioned separate from industrial components monitoring for total emissions related to the industrial facility in order to determine gross emissions from all of the industrial components in real-time.

In some embodiments, the set of sensors, the set of gas cloud imaging cameras, the set of gas leak sensing devices, the set of weather monitoring devices, and/or the one or more other data capture devices may monitor, observe, measure, and/or analyze a flare stack of an industrial facility. In some embodiments, the industrial facility embodies a processing plant associated with a particular operational goal. For example, in some embodiments, the industrial facility embodies a processing plant including any number of processing unit(s) that, alone or in combination, perform a particular industrial process. In some embodiments, the industrial facility includes or embodies an oil refinery, petrochemical plant, chemical processing plant, or other plant that converts one or more ingredient(s) into a final product by performing particular operations that utilize, process, manipulate, and/or otherwise transform the ingredient(s). In some embodiments, the industrial facility includes the flare stack as a particular processing unit thereof. The flare stack may be used to flare and/or vent one or more gases. These gases may include, but are not limited to, greenhouse gases. Flaring of gases may generate a flame.

In some embodiments, a flame associated with a flare stack may be associated with flaring. Flaring involves the igniting and burning of concentrations of flammable gases. A gas may be comprised of a plurality of concentrations of individual gases, and some of these concentrations of individual gases may be flammable. Alternatively, a gas may be comprised of a concentration of an individual gas, which may or may not be flammable. In some embodiments, a gas may contain greenhouse gases, such as hydrocarbons. The hydrocarbons may be ignited by an ignition source, such as a pilot flame, when the gas passes by the ignition source. The ignited gas(es) may be referred to as flares, and this process may be referred to as flaring. In embodiments with gases comprising hydrocarbons, the flaring of hydrocarbons will include lower emissions than the venting of the same gas(es). This is because flaring converts the hydrocarbons in the gas(es) to CO2 and water while venting does not change the composition of the waste gas to water. Thus, the flaring may reduce the emissions of hydrocarbons into the atmosphere.

In one or more embodiments, the industrial facility receives and/or processes ingredients as inputs to create a final product, such as a hydrocarbon processing plant. The industrial facility may also generate waste gasses as a result of creating the final product. In various embodiments, waste gasses may be released to atmosphere, such as through the flare stack. Alternatively, waste gases may be flared when being released to atmosphere. Additionally, or alternatively, flaring and venting of gases may occur at locations within the industrial facility and/or external to the industrial facility other than the flare stack. For example, smaller quantities of gases at other locations may be released or may leak into the atmosphere. In some embodiments, locations other than the flare stack where gases may be vented and/or flared may include well heads, safety release valves, pipe headers, and/or the like.

In one or more embodiments, the set of sensors, the set of gas cloud imaging cameras, the set of gas leak sensing devices, the set of weather monitoring devices, and/or the one or more other data capture devices monitor a flame and/or related gas emissions, for example associated with a flaring and/or a venting. In some embodiments, the gas cloud imaging cameras may be configured to capture images and/or video in one or more spectrums of light. For example, the gas cloud imaging cameras may be configured to capture images and/or video in the visible spectrum. Additional, and/or alternatively, the gas cloud imaging cameras may be configured to capture images and/or video in the infrared spectrum.

In some embodiments, the gas cloud imaging cameras may be configured to perform or execute one or more operations and/or functions with determining a type, quantity, and/or volume of gas flared and/or emitted. For example, the gas cloud imaging cameras may capture both visible light and infrared light to generate images and/or video of flaring. Based on these images and/or video of flaring, the gas cloud imaging cameras may determine a type of gas being in a flame as well as a volume of gas flared. In another example with a gas emission that is vented and not flared, the gas cloud imaging cameras may capture both visible light and infrared light to generate images and/or video of venting. Based on these images and/or video of venting, the gas cloud imaging cameras may determine a type of gas being in a flame as well as a volume of gas flared. However, it will be appreciated that any number of sensor(s), sensor type(s), and/or the like may be utilized to monitor operations of a particular industrial process and/or a particular industrial facility.

The industrial facility in some embodiments includes any number of individual processing units. The processing units may each embody an industrial asset that performs a particular function during operation of the industrial facility. For example, in the example context of a particular oil refinery embodying the industrial facility, the processing units may include a crude processing unit, a hydrotreating unit, an isomerization unit, a vapor recovery unit, a catalytic cracking unit, a aromatics reduction unit, a visbreaker unit, a storage tank, a blender, and/or the like that perform a particular operation for transforming, storing, and/or otherwise handling one or more input ingredient(s). In some embodiments, each individual unit embodying a component of the industrial facility is associated with a determinable location associated with the location data 406. The location data 406 in some embodiments represents an absolute position (e.g., global positioning system (GPS) coordinates, latitude and longitude locations, and/or the like) or a relative position (e.g., a point representation of the location of an industrial asset from a local origin point corresponding to the industrial facility). In some embodiments, an industrial asset includes or otherwise is associated with a location sensor and/or software-driven location services that provide the location data representing the location corresponding to that unit.

In other embodiments, the location data 406 additionally or alternatively includes a geographic location or a geographic region of the industrial facility. For example, in some embodiments, the industrial facility itself is associated with a determinable location. The determinable location of the industrial facility in some embodiments represents an absolute position (e.g., GPS coordinates, latitude and longitude locations, an address, and/or the like) or a relative position of the industrial facility (e.g., an identifier representing the location of the industrial facility as compared to one or more other plants, an enterprise headquarters, or general description in the world for example based at least in part on continent, state, or other definable region). In some embodiments, the industrial facility includes or otherwise is associated with a location sensor and/or software-driven location services that provide the location data corresponding to the plant 102.

The market data 402 includes real-time gas cost data (e.g., gas prices) corresponding to gas employed by the one or more industrial processes, real-time electricity cost data (e.g., electricity prices) corresponding to the one or more industrial processes, carbon credit cost data (e.g., carbon credits) available for a location associated with the location data 406, real-time interest rate data associated with a banking system associated with the location data 406, other real-time data associated with the location data 406, and/or real-time market data that enable operation of the one or more industrial processes. In one example, the market data 402 includes information related to a real-time natural gas cost data (e.g., natural gas price) for natural gas employed by the one or more industrial processes. In another example, the market data 402 includes information related to a real-time hydrogen gas cost data (e.g., hydrogen gas price) for hydrogen gas employed by the one or more industrial processes. In yet another example, the market data 402 includes information related to an offset price for a carbon credit available for a location associated with the location data 406. In yet another example, the market data 402 includes information related to a real-time electricity price for electricity provided to the industrial facility associated with the one or more industrial processes. In yet another example, the market data 402 includes information related to predetermined modeling features for carbon capture and sequestration/storage. In yet another example, the market data 402 includes information related to electrification by equipment options as carbon dioxide equivalent of electrical power changes. However, it is to be appreciated that, in certain embodiments, the market data 402 includes other information related to real-time market prices and/or conditions for material, products, and/or services that enable operation of the one or more industrial processes.

The static configuration data 404 includes resource data related to resource material employed by the one or more industrial processes, costs data related to costs associated with the one or more industrial processes, enterprise data related to assets for an enterprise associated with the one or more industrial processes, regulatory data related to regulatory incentives for the geographic location, and/or other static configuration data. In one example, the static configuration data 404 includes information related to resources and/materials utilized to perform the one or more industrial processes. The resources and/materials can include information related to a gas type and/or gas compositions for one or more gases employed by the one or more industrial processes. For instance, the static configuration data 404 can include information related to a content of each of a plurality of constituent components of a gas or fuel being used by the one or more industrial processes. The plurality of constituent components can include, but is not limited to, carbon dioxide, water, nitrous oxide, nitrogen, methane, ethane, propane, i-butane, n-butane, i-pentane, n-pentane, hexane, heptane, octane, nonane, decane, hydrogen sulfide, mercaptans, and/or another constituent component. In one example, the static configuration data 404 includes information related to properties of the gas such as, for example, a heating value property of a gas, a density of a gas, a chemical composition of a gas, fuel combustion properties of a gas, fuel release properties of gas, and/or another property of a gas. In another example, the static configuration data 404 includes information related to a project cost to modify and/or execute the one or more industrial processes. In another example, the static configuration data 404 includes information related to growth, efficiency, and/or decarbonization for one or more projects to modify and/or execute the one or more industrial processes. In one or more embodiments, a project can include adding one or more industrial assets to an industrial facility, modifying one or more industrial assets of an industrial facility, and/or removing one or more assets from an industrial facility. In another example, the static configuration data 404 includes information related to regulatory incentives for reducing emissions related to the one or more industrial processes. In another example, the static configuration data 404 includes finance measures for an industrial domain such as, for example, finance measures on carbon dioxide equivalent per dollar invested.

The set of internal constraints 410 can be related to the edge devices 161a-161n, one or more industrial facilities, and/or one or more industrial processes for an enterprise. The set of external constraints 412 can be related to one or more external sources external from the enterprise. In one or more embodiments, one or more of external constraints from the set of external constraints 412 can be non-emission constraints that facilitate emission optimization for the edge devices 161a-161n, one or more industrial facilities, and/or one or more industrial processes. For example, the set of internal constraints 410 can include capital for an enterprise associated with the one or more industrial processes, resources available for the one or more industrial processes, an infrastructure for an industrial facility associated with the one or more industrial processes, risk tolerance rules for the one or more industrial processes, implementation timelines for achieving the emission optimization associated with the one or more industrial processes, and/or one or more other internal constraints. The set of external constraints 412 can include regulatory information for a geographic location of an industrial facility associated with the one or more industrial processes, economic information for the geographic location, social information for the geographic location, technical information for an operating environment associated with the one or more industrial processes, legal information for the operating environment, environmental information for the geographic location or the operating environment, and/or one or more other external constraints. In one or more embodiments, the emission/non-emission constraint(s) 408 include and/or are configured based on a set of operational baseline thresholds for the one or more industrial processes. The set of operational baseline thresholds can be a set of predicted baseline thresholds in order to maintain and/or optimize emissions related to the one or more industrial processes. Accordingly, the emission optimization model 319 can utilize multiple types of constraints simultaneously to facilitate emission optimization for the edge devices 161a-161n, one or more industrial facilities, and/or one or more industrial processes.

In one or more embodiments, the modeling component 306 configures the emission optimization model 319 based at least in part on the emission/non-emission constraint(s) 408 including, for example, the set of internal constraints 410 and/or the set of external constraints 412. For example, in an embodiment where the emission optimization model 319 is an algorithmic model or a statistical model, the modeling component 306 can configure variables, probability distributions, rules, and/or other parameters based at least in part on the emission/non-emission constraint(s) 408 including, for example, the set of internal constraints 410 and/or the set of external constraints 412. In another embodiment where the emission optimization model 319 is a machine learning model, the modeling component 306 can train the emission optimization model 319 based at least in part on the emission/non-emission constraint(s) 408 including, for example, the set of internal constraints 410 and/or the set of external constraints 412. For example, the modeling component 306 can determine and/or tune one or more parameters (e.g., one or more hyperparameters, one or more weights, etc.) for one or more learning processes associated with the emission optimization model 319 based at least in part on the emission/non-emission constraint(s) 408 including, for example, the set of internal constraints 410 and/or the set of external constraints 412.

In one or more embodiments, the modeling component 306 applies the emission optimization model 319 to the measurement data 314, the market data 402, the static configuration data 404, and/or the location data 406 to determine emission optimization pathway data 414 that at least satisfy the set of emission constraints of the emission/non-emission constraint(s) 408 including, for example, the set of internal constraints 410 and/or the set of external constraints 412. Additionally or alternatively, the modeling component 306 applies the emission optimization model to the measurement data 314, the market data 402, the static configuration data 404, and/or the location data 406 to optimize the at least one non-emission constraint of the emission/non-emission constraint(s) 408. Accordingly, the emission optimization model 319 can utilize the measurement data 314 together with other data such as the market data 402, the static configuration data 404, and/or the location data 406 to determine the emission optimization pathway data 414. In one or more embodiments, a portion of the measurement data 314, the market data 402, the static configuration data 404, and/or the location data 406 can include historical measurement data and/or historical emission optimization pathway data (e.g., historical work order data, historical modifications, etc.) that can be utilized by the emission optimization model 319 to determine the emission optimization pathway data 414.

The emission optimization pathway data 414 can include information related to a minimum total cost to achieve a certain degree of emission optimization for the one or more industrial processes, information related to a minimum capital investment to achieve a certain degree of emission optimization for the one or more industrial processes, information related to a lowest amount of risk to achieve a certain degree of emission optimization for the one or more industrial processes, information related to a achieving a certain degree of regulatory compliance for the one or more industrial processes, information related emissions for the emission optimization for the one or more industrial processes, and/or other emission optimization pathway data 414. In one or more embodiments, the emission optimization pathway data 414 includes an optimal pathway including one or more modifications for one more industrial processes and/or one or more industrial assets to achieve a certain degree of emission optimization. In one or more embodiments, the emission optimization pathway data 414 includes one or more actions to perform with respect to the one or more industrial processes and/or one or more industrial assets to achieve a certain degree of emission optimization. In one or more embodiments, the emission optimization pathway data 414 includes one or more operational modifications for the one or more industrial processes that satisfy the set of emission constraints and optimize the at least one non-emission constraint. In one or more embodiments, the emission optimization pathway data 414 includes data for a decarbonization historian to facilitate execution of the emission optimization with respect to the one or more industrial processes and/or one or more industrial assets. In one or more embodiments, the emission optimization pathway data 414 includes work order data to facilitate execution of the emission optimization with respect to the one or more industrial processes and/or one or more industrial assets.

Additionally or alternatively, in some embodiments, the emission optimization pathway data 414 is optimized in a manner that optimizes a plurality of target parameters for optimization, including the emission optimization and one or more other target parameter optimization(s) (e.g., highest emissions reduction while remaining safe and at a lowest cost over a particular time interval). For example, the emission optimization pathway data 414 can include a modification plan for one or more industrial processes, one or more industrial assets, and/or one or more industrial facilities that is optimized for emissions and one or more other non-emission parameter considerations (e.g., costs, etc.). The emission optimization pathway data 414 can additionally or alternatively be determined based on actual units of an industrial facility, a location of an industrial facility, availability of resources at the location, etc. Moreover, the emission optimization model 319 can learn from prior determined modifications associated with historical optimization pathway data and/or data stored in the historian database 318. In one or more embodiments, one or more portions of the emission optimization pathway data 414 can be provided to one or more production models associated with one or more industrial processes and/or one or more industrial assets. For example, fuel blending information can be included in the emission optimization pathway data 414 and can be provided to one or more production models to optimize site-wide operations and/or industrial processes at a minimal carbon dioxide equivalent tonne per tonne or barrel of crude oil. In one or more embodiments, one or more portions of the emission optimization pathway data 414 can include emissions characterization factors and/or benchmarks against baselines (in-network and/or out-of-network) to prioritize bad actors for industrial processes and/or to determine optimal practices for knowledge sharing, capture and improvement.

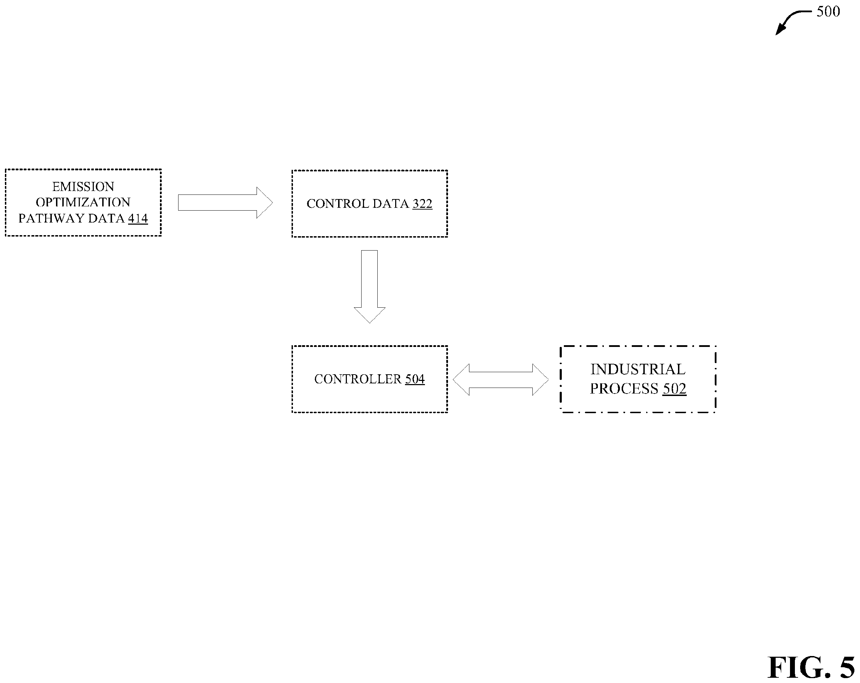

FIG. 5 illustrates an industrial process 502 according to one or more described features of one or more embodiments of the disclosure. In one or more embodiments, the industrial process 502 is an industrial process for an industrial facility (e.g., an industrial plant). Furthermore, in one or more embodiments, the industrial process 502 produces one or more industrial process products (e.g., one or more output streams of processed materials). In one or more embodiments, the industrial process 502 is configured for converting one or more input streams of feed materials (e.g., gas stocks) into component inventory and/or industrial process products. In one or more embodiments, the industrial process 502 is controlled by a controller 504. In one or more embodiments, the control component 308 is configured to generate the control data 322 based on the emission optimization pathway data 414. In one or more embodiments, the control data 322 includes one or more control signals configured based on the emission optimization pathway data 414. In one or more embodiments, the control data 322 includes one or more setpoints for the industrial process 502. A setpoint can be an industrial asset setting (e.g., an asset setpoint). For instance, in one or more embodiments, the one or more setpoints include one or more voltage values, one or more current values, one or more switch states, and/or one or more other configuration settings for respective industrial assets. In one or more embodiments, the control data 322 is configured based on one or more communication protocols and/or one or more automation protocols associated with the controller 504. The one or more communication protocols can include one or more industrial communication protocols, one or more wireless communication protocols, one or wired protocols, and/or one or more other communication protocols to provide communication and/or ingestion of the control data 322 via the controller 504.

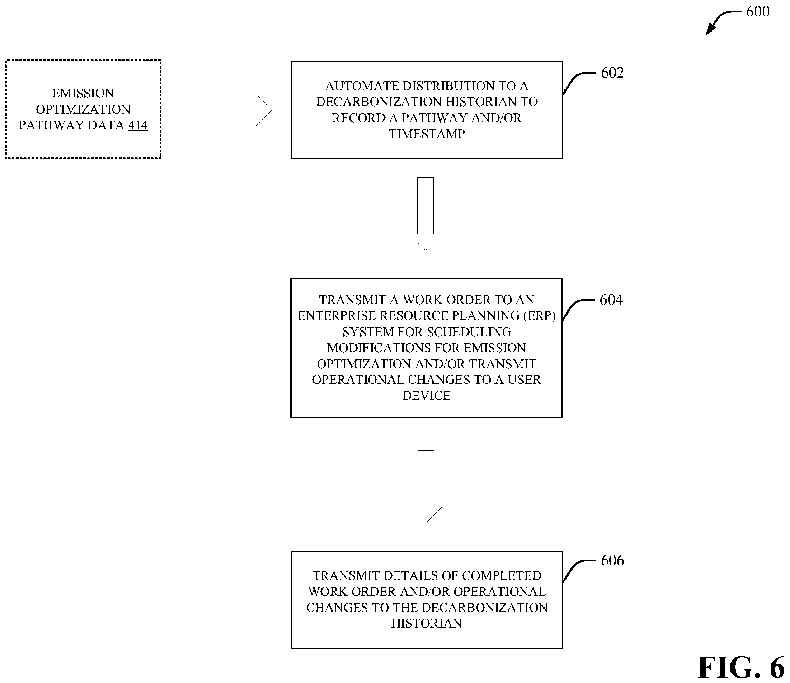

FIG. 6 illustrates an example emission optimization pathway 600 according to one or more described features of one or more embodiments of the disclosure. In one or more embodiments, the emission optimization pathway 600 includes a step 602 that utilizes the emission optimization pathway data 414 to automate distribution to a decarbonization historian to record a pathway and/or a timestamp. For example, at least a portion of the data included in the emission optimization pathway data 414 (e.g., data associated with one or more operational modifications for one or more industrial processes) and/or related timestamp data can be recorded in a decarbonization historian database. In one or more embodiments, the emission optimization pathway 600 includes a step 604 that transmits a work order to an enterprise resource planning (ERP) system for scheduling, automatically or manually, modifications for emission optimization. In some embodiments, the ERP system stores data embodying work orders or other data record(s) of modifications for a particular plant, processing unit thereof, of other device of an enterprise, that is to be performed, being performed, or was historically performed, together with timestamp data corresponding to when such data was generated, stored, updated, and/or the like. In this regard, the ERP system may include modification data that can be cross-referenced with operations data associated with such device(s) at particular timestamps, for example where the operations data is represented in the measurement data 314. Additionally or alternatively, the step transmits operational changes to a user device. For example, a work order notification for the one or more industrial processes can be generated based at least in part on the one or more operational modifications. The work order notification can be rendered via a display of the user device. The user device can be a mobile computing device, a smartphone, a tablet computer, a mobile computer, a desktop computer, a laptop computer, a workstation computer, a wearable device, a virtual reality device, an augmented reality device, or another type of user device. In one or more embodiments, the emission optimization pathway 600 includes a step 606 that transmits details of a completed work order and/or operational changes to the decarbonization historian. For example, in response to the one or more operational modifications being applied to the one or more industrial processes via the work order notification, the data in the decarbonization historian database can be updated based at least in part on the work order notification and/or the operational changes. In one or more embodiments, the emission optimization model determines the one or more operational modifications based at least in part on the data in the decarbonization historian. In one or more embodiments, the subsequently captured data (e.g., after the completed work order is achieved) can be employed to determine whether a proposed modification related to the work order satisfies a certain degree of emissions reduction and/or other emissions criteria. In certain embodiments, one or more portions of the emission optimization model 319 can be modified to account for whether the proposed modification related to the work order satisfies a certain degree of emissions reduction or not.

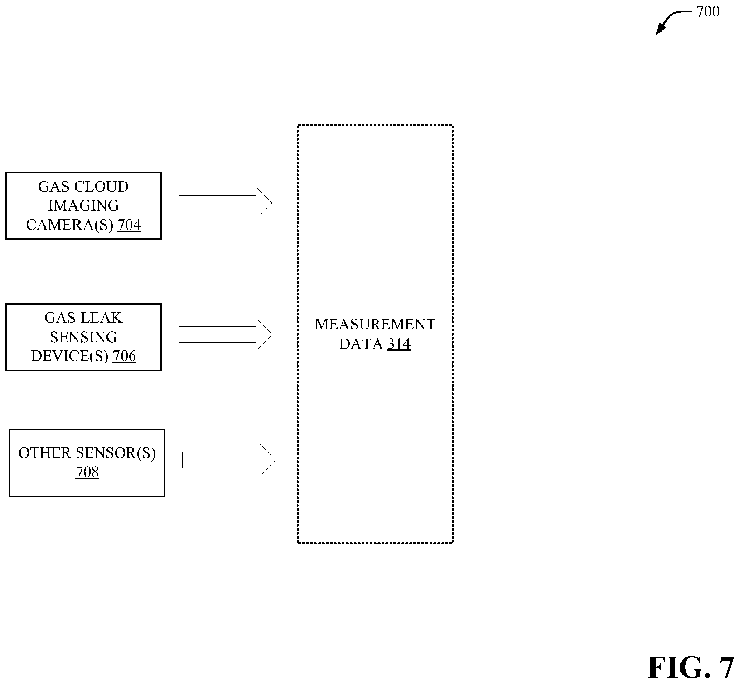

FIG. 7 illustrates a system 700 that includes one or more data capture devices capable of capturing one or more portions of measurement data according to one or more described features of one or more embodiments of the disclosure. In one or more embodiments, the system 700 includes one or more gas cloud imaging cameras 704, one or more gas leak sensing devices 706, and/or one or more other sensors 708 that respectively capture one or more real-time measurements included in one or more portions of the measurement data 314. The one or more gas cloud imaging cameras 704 can employ hyperspectral imaging to detect and/or measure gas cloud emissions via continuous visual emissions monitoring. For example, the one or more gas cloud imaging cameras 704 can collect data to calculate and/or quantify emissions via hyperspectral imaging of gas clouds. In one or more embodiments, the one or more gas cloud imaging cameras 704 can employ hyperspectral imaging to detect and/or measure gas cloud emissions related to, but not limited to, acetone, acetylene, acrylonitrile, ammonia, butadiene, difluoroethane, ethane, ethylene, ethylene oxide, iso-butane, isobutylene, methane, methanol, natural gas, N-butane, propane, propylene, propylene oxide, sulfur hexafluoride, toluene, and/or xylene. In one or more embodiments, the one or more gas cloud imaging cameras 704 can provide gas quantification related to gas emissions. The one or more gas leak sensing devices 706 can be configured to detect leaks of combustible fuels and/or gases in real-time. In one or more embodiments, the one or more gas leak sensing devices 706 can detect a gas leak event and/or measure an amount of gas related to a gas leak event. In one or more embodiments, the one or more gas cloud imaging cameras 704 can be respectively configured with one or more sensors to detect and/or measure gas cloud emissions. Additionally or alternatively, the one or more gas leak sensing devices 706 can be respectively configured with one or more sensors to detect a gas leak event and/or measure an amount of gas related to a gas leak event. The one or more other sensors 708 can include one or more industrial process sensors, one or more emission sensors, one or more temperature sensors, one or more pressure sensors, one or more fuel level sensors, one or more infrared sensors, one or more proximity sensors, one or more optical sensors, one or more humidity sensors, one or more image sensors, one or more light sensors, one or more vibration sensors, one or more smart sensors, one or more IoT sensors, and/or one or more other sensors.

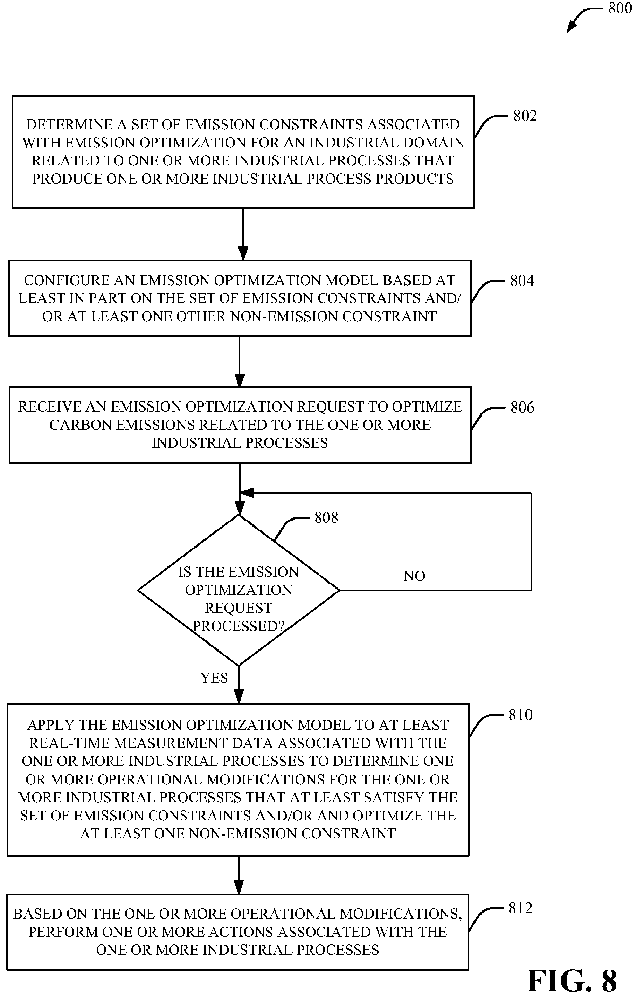

FIG. 8 illustrates a method 800 for providing emission optimization for industrial processes, in accordance with one or more embodiments described herein. The method 800 is associated with the emission optimization computer system 302, for example. For instance, in one or more embodiments, the method 800 is executed at a device (e.g., the emission optimization computer system 302) with one or more processors and a memory. In one or more embodiments, the method 800 begins at block 802 that determines (e.g., by the modeling component 306) a set of emission constraints associated with emission optimization for an industrial domain related to one or more industrial processes that produce one or more industrial process products. In one or more embodiments, the method 800 includes a block 804 that configures (e.g., by the modeling component 306) an emission optimization model based at least in part on the set of emission constraints and/or at least one other non-emission constraint. In one or more embodiments, the method 800 includes a block 806 that receives (e.g., by the modeling component 306) an emission optimization request to optimize carbon emissions related to the one or more industrial processes.

At block 808, it is determined whether the emission optimization request is processed. If no, block 808 is repeated to determine whether the emission optimization request is processed. If yes, the method 800 proceeds to block 810. In response to the emission optimization request, the block 810 applies (e.g., by the modeling component 306) the emission optimization model to at least real-time measurement data associated with the one or more industrial processes to determine one or more operational modifications for the one or more industrial processes that at least satisfy the set of emission constraints and/or optimize the at least one non-emission constraint. In response to the emission optimization request, in one or more embodiments, the method 800 includes a block 812 that, based on the one or more operational modifications, performs (e.g., by the control component 308) one or more actions associated with the one or more industrial processes.

In one or more embodiments, the method 800 additionally or alternatively includes capturing at least a portion of the real-time measurement data via a set of sensors configured to monitor real-time emissions related to the one or more industrial processes. In one or more embodiments, the method 800 additionally or alternatively includes applying the emission optimization model to the portion of the real-time measurement data associated with the set of sensors.

In one or more embodiments, the method 800 additionally or alternatively includes capturing at least a portion of the real-time measurement data via a set of gas cloud imaging cameras configured to monitor real-time emissions related to the one or more industrial processes. In one or more embodiments, the method 800 additionally or alternatively includes applying the emission optimization model to the portion of the real-time measurement data associated with the set of gas cloud imaging cameras.

In one or more embodiments, the method 800 additionally or alternatively includes capturing at least a portion of the real-time measurement data via a set of gas leak sensing devices configured to monitor for or predict gas leaks related to the one or more industrial processes. In one or more embodiments, the method 800 additionally or alternatively includes applying the emission optimization model to the portion of the real-time measurement data associated with the set of gas leak sensing devices.

In one or more embodiments, the method 800 additionally or alternatively includes determining market data that includes real-time gas cost data corresponding to gas employed by the one or more industrial processes, real-time electricity cost data corresponding to the one or more industrial processes, carbon credit cost data available for a location associated with the industrial domain, and/or real-time interest rate data associated with a banking system associated with the location. In one or more embodiments, the method 800 additionally or alternatively includes applying the emission optimization model to the real-time measurement data and the market data to determine the one or more operational modifications for the one or more industrial processes that satisfy the set of emission constraints.

In one or more embodiments, the method 800 additionally or alternatively includes determining static configuration data that includes resource data related to resource material employed by the one or more industrial processes, costs data related to costs associated with the one or more industrial processes, enterprise data related to assets for an enterprise associated with the one or more industrial processes, and/or regulatory data related to regulatory incentives for a geographic location of an industrial facility associated with the one or more industrial processes. In one or more embodiments, the method 800 additionally or alternatively includes applying the emission optimization model to the real-time measurement data and the static configuration data to determine the one or more operational modifications for the one or more industrial processes that satisfy the set of emission constraints.

In one or more embodiments, the method 800 additionally or alternatively includes determining the set of emission constraints based at least in part on a set of operational baseline thresholds for the one or more industrial processes.

In one or more embodiments, the method 800 additionally or alternatively includes determining the set of emission constraints based at least in part on a set of internal constraints that includes capital for an enterprise associated with the one or more industrial processes, resources available for the one or more industrial processes, an infrastructure for an industrial facility associated with the one or more industrial processes, risk tolerance rules for the one or more industrial processes, and/or implementation timelines for achieving the emission optimization associated with the one or more industrial processes.

In one or more embodiments, the method 800 additionally or alternatively includes determining the set of emission constraints based at least in part on a set of external constraints that includes regulatory information for a geographic location of an industrial facility associated with the one or more industrial processes, economic information for the geographic location, social information for the geographic location, technical information for an operating environment associated with the one or more industrial processes, legal information for the operating environment, and environmental information for the geographic location or the operating environment.

In one or more embodiments, the method 800 additionally or alternatively includes determining the set of emission constraints based at least in part on user input received via a dashboard visualization rendered on a display of a user device.

In one or more embodiments, the method 800 additionally or alternatively includes transmitting a control signal configured based on the one or more operational modifications to a controller associated with the one or more industrial processes. In one or more embodiments, the method 800 additionally or alternatively includes transmitting the control signal in response to a level of risk associated with the one or more operational modifications being below a defined risk threshold.

In one or more embodiments, the method 800 additionally or alternatively includes recording data associated with the one or more operational modifications and related timestamp data in a decarbonization historian database. In one or more embodiments, the method 800 additionally or alternatively includes generating a work order notification for the one or more industrial processes based at least in part on the one or more operational modifications. In one or more embodiments, the method 800 additionally or alternatively includes in response to the one or more operational modifications being applied to the one or more industrial processes via the work order notification, updating the data in the decarbonization historian database based at least in part on the work order notification. In one or more embodiments, the emission optimization model determines the one or more operational modifications based at least in part on the data in the decarbonization historian database.

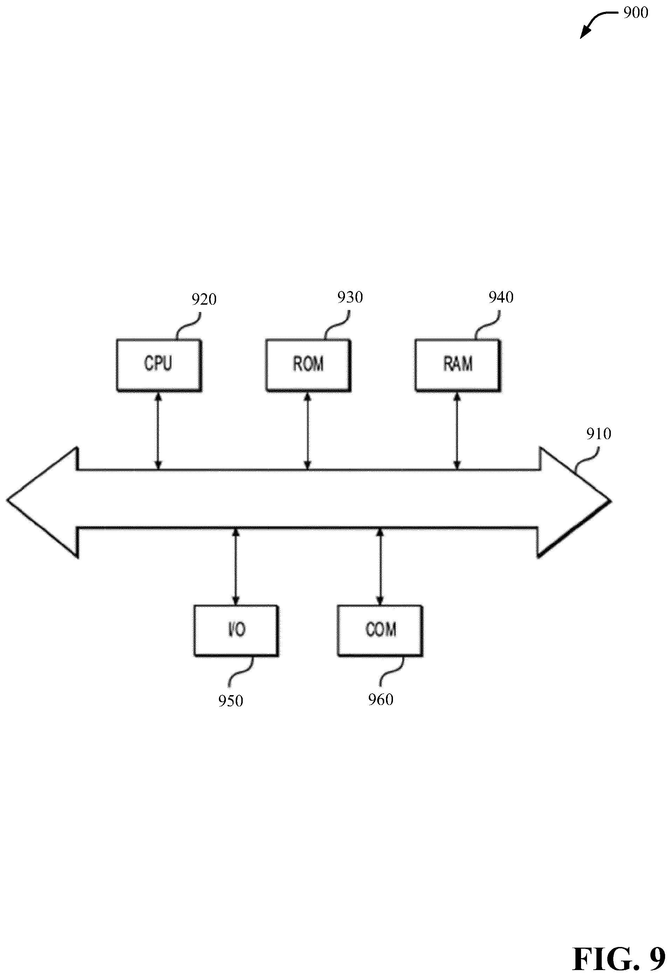

FIG. 9 depicts an example system 900 that may execute techniques presented herein. FIG. 9 is a simplified functional block diagram of a computer that may be configured to execute techniques described herein, according to exemplary embodiments of the present disclosure. Specifically, the computer (or "platform" as it may not be a single physical computer infrastructure) may include a data communication interface 960 for packet data communication. The platform also may include a central processing unit ("CPU") 920, in the form of one or more processors, for executing program instructions. The platform may include an internal communication bus 910, and the platform also may include a program storage and/or a data storage for various data files to be processed and/or communicated by the platform such as ROM 930 and RAM 940, although the system 900 may receive programming and data via network communications. The system 900 also may include input and output ports 950 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components can be used in conjunction with the supply management system. Therefore, it is to be understood that the inventions are not to be limited to the specific embodiments disclosed and that modifications and other embodiments are intended to be included within the scope of the appended claims. Moreover, the steps in the method described above can not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

It is intended that the specification and examples be considered as exemplary only, with a true scope of the disclosure being indicated by the following claims.

## Claims

1. A system (900), comprising:
one or more processors (920);
a memory (930, 940) having program code stored thereon that, in execution with the at least one processor (920), causes the system (900) to:
determine a set of emission constraints associated with emission optimization for an industrial domain related to one or more industrial processes that produce one or more industrial process products;
configure an emission optimization model based at least in part on the set of emission constraints and at least one other non-emission constraint;
receive an emission optimization request to optimize carbon emissions related to the one or more industrial processes; and
in response to the emission optimization request:
apply the emission optimization model to real-time measurement data associated with the one or more industrial processes to determine one or more operational modifications for the one or more industrial processes that at least satisfy the set of emission constraints and optimize the at least one non-emission constraint, wherein at least a portion of the real-time measurement data are captured by a set of sensors configured to monitor real-time emissions related to the one or more industrial processes, and wherein the captured real-time measurement data comprises: (i) emissions measured by a plurality of point measurement gas sensors positioned in close proximity to potential leak sources within an industrial facility; and (ii) emissions measured by one or more gas cloud imaging cameras positioned to monitor total emissions of the industrial facility in real-time;
determine, based on the emissions measured by the plurality of point measurement gas sensors, a total emissions value representing an aggregate obtained via a summation of all of emission sources;
determine, based on the emissions measured by the one or more gas cloud imaging cameras, a gross emissions value representing facility-level emissions of the industrial facility;
evaluate the total emissions value relative to the gross emissions value to generate an evaluated emissions data set;
determine the one or more operational modifications based at least in part on the evaluated emissions data set;
based on the one or more operational modifications, perform one or more actions associated with the one or more industrial processes; and
transmit a control signal configured based on the one or more operational modifications to a controller associated with the one or more industrial processes.

2. The system (900) of claim 1, wherein the program code further causes the system (900) to:
capture at least a portion of the real-time measurement data via a set of gas cloud imaging cameras configured to monitor real-time emissions related to the one or more industrial processes; and
apply the emission optimization model to the portion of the real-time measurement data associated with the set of gas cloud imaging cameras.

3. The system (900) of any one of claims 1-2, wherein the program code further causes the system (900) to:
capture at least a portion of the real-time measurement data via a set of gas leak sensing devices configured to monitor for or predict gas leaks related to the one or more industrial processes; and
apply the emission optimization model to the portion of the real-time measurement data associated with the set of gas leak sensing devices.

4. The system (900) of any one of claims 1-3, wherein the program code further causes the system (900) to:
determine market data that comprises at least one of real-time gas cost data corresponding to gas employed by the one or more industrial processes, real-time electricity cost data corresponding to the one or more industrial processes, carbon credit cost data available for a location associated with the industrial domain, and real-time interest rate data associated with a banking system associated with the location; and
apply the emission optimization model to the real-time measurement data and the market data to determine the one or more operational modifications for the one or more industrial processes that satisfy the set of emission constraints.

5. The system (900) of any one of claims 1-4, wherein the program code further causes the system (900) to:
determine static configuration data that comprise at least one of resource data related to resource material employed by the one or more industrial processes, costs data related to costs associated with the one or more industrial processes, enterprise data related to assets for an enterprise associated with the one or more industrial processes, and regulatory data related to regulatory incentives for a geographic location of an industrial facility associated with the one or more industrial processes; and
apply the emission optimization model to the real-time measurement data and the static configuration data to determine the one or more operational modifications for the one or more industrial processes that satisfy the set of emission constraints.

6. The system (900) of any one of claims 1-5, wherein the program code further causes the system (900) to:
determine the set of emission constraints based at least in part on a set of operational baseline thresholds for the one or more industrial processes.

7. The system (900) of any one of claims 1-6, wherein the program code further causes the system (900) to:
determine the set of emission constraints based at least in part on a set of internal constraints that comprise at least one of capital for an enterprise associated with the one or more industrial processes, resources available for the one or more industrial processes, an infrastructure for an industrial facility associated with the one or more industrial processes, risk tolerance rules for the one or more industrial processes, and implementation timelines for achieving the emission optimization associated with the one or more industrial processes.

8. The system (900) of any one of claims 1-7, wherein the program code further causes the system (900) to:
determine the set of emission constraints based at least in part on a set of external constraints that comprises regulatory information for a geographic location of an industrial facility associated with the one or more industrial processes, economic information for the geographic location, social information for the geographic location, technical information for an operating environment associated with the one or more industrial processes, legal information for the operating environment, and environmental information for the geographic location or the operating environment.

9. The system (900) of any one of claims 1-8, wherein the program code further causes the system (900) to:
determine the set of emission constraints based at least in part on user input received via a dashboard visualization rendered on a display of a user device.

10. The system (900) of claim 1, wherein the program code further causes the system (900) to:
transmit the control signal in response to a level of risk associated with the one or more operational modifications being below a defined risk threshold.

11. The system (900) of any one of claims 1-10, wherein the program code further causes the system (900) to:
record data associated with the one or more operational modifications and related timestamp data in a decarbonization historian database;
generate a work order notification for the one or more industrial processes based at least in part on the one or more operational modifications; and
in response to the one or more operational modifications being applied to the one or more industrial processes via the work order notification, update the data in the decarbonization historian database based at least in part on the work order notification,
wherein the emission optimization model determines the one or more operational modifications based at least in part on the data in the decarbonization historian database.

12. A computer-implemented method comprising:
determining a set of emission constraints associated with emission optimization for an industrial domain related to one or more industrial processes that produce one or more industrial process products;
configuring an emission optimization model based at least in part on the set of emission constraints and at least one other non-emission constraint;
receiving an emission optimization request to optimize carbon emissions related to the one or more industrial processes; and
in response to the emission optimization request:
applying the emission optimization model to real-time measurement data associated with the one or more industrial processes to determine one or more operational modifications for the one or more industrial processes that at least satisfy the set of emission constraints and optimize the at least one non-emission constraint, wherein at least a portion of the real-time measurement data are captured by a set of sensors configured to monitor real-time emissions related to the one or more industrial processes and wherein the captured real-time measurement data comprises: (i) emissions measured by a plurality of point measurement gas sensors positioned in close proximity to potential leak sources within an industrial facility; and (ii) emissions measured by one or more gas cloud imaging cameras positioned to monitor total emissions of the industrial facility in real-time;
determining, based on the emissions measured by the plurality of point measurement gas sensors, a total emissions value representing an aggregate obtained via a summation of all of emission sources;
determining, based on the emissions measured by the one or more gas cloud imaging cameras, a gross emissions value representing facility-level emissions of the industrial facility;
evaluating the total emissions value relative to the gross emissions value to generate an evaluated emissions data set;
determining the one or more operational modifications based at least in part on the evaluated emissions data set;
based on the one or more operational modifications, performing one or more actions associated with the one or more industrial processes; and
transmitting a control signal configured based on the one or more operational modifications to a controller associated with the one or more industrial processes.

## Patentansprüche

1. System (900), umfassend:
einen oder mehrere Prozessoren (920)
einen Speicher (930, 940), in dem Programmcode gespeichert ist, der, wenn er durch den mindestens einen Prozessor (920) ausgeführt wird, das System (900) dazu veranlasst:
einen Satz von Emissionsbeschränkungen zu bestimmen, die mit einer Emissionsoptimierung für einen industriellen Bereich verknüpft sind, der mit einem oder mehreren industriellen Prozessen in Zusammenhang steht, die ein oder mehrere Industrieprozessprodukte produzieren;
ein Emissionsoptimierungsmodell zu konfigurieren, das mindestens teilweise auf dem Satz von Emissionsbeschränkungen und mindestens einer weiteren Nicht-Emissions-Beschränkung basiert;
Empfangen einer Emissionsoptimierungsanforderung zum Optimieren von CO₂-Emissionen im Zusammenhang mit dem einen oder den mehreren industriellen Prozessen; und
als Reaktion auf die Emissionsoptimierungsanforderung:
das Emissionsoptimierungsmodell auf Echtzeit-Messdaten anzuwenden, die mit dem einen oder den mehreren industriellen Prozessen verknüpft sind, um eine oder mehrere Betriebsmodifizierungen für den einen oder die mehreren industriellen Prozesse zu bestimmen, die mindestens den Satz von Emissionsbeschränkungen erfüllen und die mindestens eine Nicht-Emissions-Beschränkung optimieren, wobei mindestens ein Abschnitt der Echtzeit-Messdaten durch einen Satz von Sensoren erfasst wird, die dazu konfiguriert sind, Echtzeit-Emissionen zu überwachen, die mit dem einen oder den mehreren industriellen Prozessen in Zusammenhang stehen, und wobei die erfassten Echtzeit-Messdaten umfassen: (i) Emissionen, die durch eine Mehrzahl von Punktmessungs-Gassensoren gemessen werden, die in unmittelbarer Nähe zu potenziellen Leckquellen innerhalb einer Industrieanlage positioniert sind; und (ii) Emissionen, die durch eine oder mehrere Gaswolken-Bildgebungskameras gemessen werden, die so positioniert sind, dass sie die Gesamtemissionen der Industrieanlage in Echtzeit überwachen;
auf der Grundlage der durch die Mehrzahl von Punktmessungs-Gassensoren gemessenen Emissionen einen Gesamtemissionswert zu bestimmen, der ein Aggregat darstellt, das durch eine Summation aller Emissionsquellen erhalten wird;
auf der Grundlage der durch die eine oder die mehreren Gaswolken-Bildgebungskameras gemessenen Emissionen einen Bruttoemissionswert zu bestimmen, der die anlagenweiten Emissionen der Industrieanlage darstellt;
den Gesamtemissionswert relativ zu dem Bruttoemissionswert zu evaluieren, um einen Satz evaluierter Emissionsdaten zu generieren;
die eine oder die mehreren Betriebsmodifizierungen mindestens teilweise auf der Grundlage des Satzes evaluierter Emissionsdaten zu bestimmen;
auf der Grundlage der einen oder der mehreren Betriebsmodifizierungen eine oder mehrere Aktionen durchzuführen, die mit dem einen oder den mehreren industriellen Prozessen im Zusammenhang stehen; und
ein Steuersignal, das auf der Grundlage der einen oder der mehreren Betriebsmodifizierungen konfiguriert wurde, an einen Controller zu senden, der mit dem einen oder den mehreren industriellen Prozessen verknüpft ist.

2. System (900) nach Anspruch 1, wobei der Programmcode das System (900) ferner dazu veranlasst:
mindestens einen Abschnitt der Echtzeit-Messdaten über einen Satz von Gaswolken-Bildgebungskameras zu erfassen, die dazu konfiguriert sind, Echtzeit-Emissionen, die mit dem einen oder den mehreren industriellen Prozessen in Zusammenhang stehen, zu überwachen; und
das Emissionsoptimierungsmodell auf den Abschnitt der Echtzeit-Messdaten anzuwenden, der mit dem Satz von Gaswolken-Bildgebungskameras verknüpft ist.

3. System (900) nach einem der Ansprüche 1 bis 2, wobei der Programmcode das System (900) ferner dazu veranlasst:
mindestens einen Abschnitt der Echtzeit-Messdaten über einen Satz von Gasleck-Sensorvorrichtungen zu erfassen, die dazu konfiguriert sind, Gaslecks, die mit dem einen oder den mehreren industriellen Prozessen in Zusammenhang stehen, zu überwachen oder vorherzusagen; und
das Emissionsoptimierungsmodell auf den Abschnitt der Echtzeit-Messdaten, der mit dem Satz von Gasleck-Sensorvorrichtungen verknüpft ist, anzuwenden.

4. System (900) nach einem der Ansprüche 1 bis 3, wobei der Programmcode das System (900) ferner dazu veranlasst:
Marktdaten zu bestimmen, die mindestens eines von Folgendem umfassen: Echtzeit-Gaskostendaten, die Gas entsprechen, das durch den einen oder die mehreren industriellen Prozesse verbraucht wird, Echtzeit-Elektrizitätskostendaten, die dem einen oder den mehreren industriellen Prozessen entsprechen, Emissionszertifikate-Kostendaten, die für einen Standort verfügbar sind, der mit dem industriellen Bereich im Zusammenhang steht, und Echtzeit-Zinssatzdaten, die mit einem Bankensystem verknüpft sind, das mit dem Standort im Zusammenhang steht; und
das Emissionsoptimierungsmodell auf die Echtzeit-Messdaten und die Marktdaten anzuwenden, um die eine oder die mehreren Betriebsmodifizierungen für den einen oder die mehreren industriellen Prozesse zu bestimmen, die den Satz von Emissionsbeschränkungen erfüllen.

5. System (900) nach einem der Ansprüche 1 bis 4, wobei der Programmcode das System (900) ferner dazu veranlasst:
statische Konfigurationsdaten zu bestimmen, die mindestens eines von Folgendem umfassen: Ressourcendaten, die sich auf Ressourcenmaterial beziehen, das durch den einen oder die mehreren industriellen Prozesse verbraucht wird, Kostendaten, die sich auf Kosten beziehen, die mit dem einen oder den mehreren industriellen Prozessen im Zusammenhang stehen, Unternehmensdaten, die sich auf Betriebsmittel für ein Unternehmen beziehen, die mit dem einen oder den mehreren industriellen Prozessen im Zusammenhang stehen, und regulatorische Daten, die sich auf regulatorische Anreize für einen geografischen Standort einer Industrieanlage beziehen, die mit dem einen oder den mehreren industriellen Prozessen im Zusammenhang steht; und
das Emissionsoptimierungsmodell auf die Echtzeit-Messdaten und die statischen Konfigurationsdaten anzuwenden, um die eine oder die mehreren Betriebsmodifizierungen für den einen oder die mehreren industriellen Prozesse zu bestimmen, die den Satz von Emissionsbeschränkungen erfüllen.

6. System (900) nach einem der Ansprüche 1 bis 5, wobei der Programmcode das System (900) ferner dazu veranlasst:
den Satz von Emissionsbeschränkungen mindestens teilweise auf der Grundlage eines Satzes betrieblicher Ausgangsbasisschwellen für den einen oder die mehreren industriellen Prozesse zu bestimmen.

7. System (900) nach einem der Ansprüche 1 bis 6, wobei der Programmcode das System (900) ferner dazu veranlasst:
den Satz von Emissionsbeschränkungen mindestens teilweise auf der Grundlage eines Satzes interner Beschränkungen zu bestimmen, die mindestens eines von Folgendem umfassen: Kapital für ein Unternehmen, das mit dem einen oder den mehreren industriellen Prozessen im Zusammenhang steht, Ressourcen, die für den einen oder die mehreren industriellen Prozesse zur Verfügung stehen, eine Infrastruktur für eine Industrieanlage, die mit dem einen oder den mehreren industriellen Prozessen im Zusammenhang steht, Risikotoleranzregeln für den einen oder die mehreren industriellen Prozesse und Implementierungsfristen für das Erreichen der Emissionsoptimierung, die mit dem einen oder den mehreren industriellen Prozessen im Zusammenhang steht.

8. System (900) nach einem der Ansprüche 1 bis 7, wobei der Programmcode das System (900) ferner dazu veranlasst:
den Satz von Emissionsbeschränkungen mindestens teilweise auf der Grundlage eines Satzes externer Beschränkungen zu bestimmen, der Folgendes umfasst: regulatorische Informationen für einen geografischen Standort einer Industrieanlage, die mit dem einen oder den mehreren industriellen Prozessen im Zusammenhang stehen, wirtschaftliche Informationen für den geografischen Standort, soziale Informationen für den geografischen Standort, technische Informationen für eine Betriebsumgebung, die mit dem einen oder den mehreren industriellen Prozessen im Zusammenhang stehen, rechtliche Informationen für die Betriebsumgebung und Umweltinformationen für den geografischen Standort oder die Betriebsumgebung.

9. System (900) nach einem der Ansprüche 1 bis 8, wobei der Programmcode das System (900) ferner dazu veranlasst:
den Satz von Emissionsbeschränkungen mindestens teilweise auf der Grundlage von Benutzereingaben zu bestimmen, die über eine auf einem Display einer Benutzervorrichtung wiedergegebene Dashboard-Visualisierung empfangen werden.

10. System (900) nach Anspruch 1, wobei der Programmcode das System (900) ferner dazu veranlasst:
das Steuersignal als Reaktion darauf zu senden, dass ein Risikoniveau, das mit der einen oder den mehreren Betriebsmodifizierungen im Zusammenhang steht, unterhalb einer definierten Risikoschwelle liegt.

11. System (900) nach einem der Ansprüche 1 bis 10, wobei der Programmcode das System (900) ferner dazu veranlasst:
Daten, die mit der einen oder den mehreren Betriebsmodifizierungen verknüpft sind, und zugehörige Zeitstempeldaten in einer Dekarbonisierungsverlaufsdatenbank aufzuzeichnen;
eine Arbeitsauftragsbenachrichtigung für den einen oder die mehreren industriellen Prozesse mindestens teilweise auf Grundlage der einen oder der mehreren Betriebsmodifizierungen zu generieren; und
als Reaktion darauf, dass die eine oder die mehreren Betriebsmodifizierungen über die Arbeitsauftragsbenachrichtigung auf den einen oder die mehreren industriellen Prozesse angewendet werden, die Daten in der Dekarbonisierungsverlaufsdatenbank mindestens teilweise auf der Grundlage der Arbeitsauftragsbenachrichtigung zu aktualisieren,
wobei das Emissionsoptimierungsmodell die eine oder die mehreren Betriebsmodifizierungen mindestens teilweise auf der Grundlage der Daten in der Dekarbonisierungsverlaufsdatenbank bestimmt.

12. Computerimplementiertes Verfahren, umfassend:
Bestimmen eines Satzes von Emissionsbeschränkungen, die mit einer Emissionsoptimierung für einen industriellen Bereich verknüpft sind, der mit einem oder mehreren industriellen Prozessen in Zusammenhang steht, die ein oder mehrere Industrieprozessprodukte produzieren;
Konfigurieren eines Emissionsoptimierungsmodells, das mindestens teilweise auf dem Satz von Emissionsbeschränkungen und mindestens einer weiteren Nicht-Emissions-Beschränkung basiert;
Empfangen einer Emissionsoptimierungsanforderung zum Optimieren von CO₂-Emissionen, die mit dem einen oder den mehreren industriellen Prozessen in Zusammenhang stehen; und
als Reaktion auf die Emissionsoptimierungsanforderung:
Anwenden des Emissionsoptimierungsmodells auf Echtzeit-Messdaten, die mit dem einen oder den mehreren industriellen Prozessen verknüpft sind, um eine oder mehrere Betriebsmodifizierungen für den einen oder die mehreren industriellen Prozesse zu bestimmen, die mindestens den Satz von Emissionsbeschränkungen erfüllen und die mindestens eine Nicht-Emissions-Beschränkung optimieren, wobei mindestens ein Abschnitt der Echtzeit-Messdaten durch einen Satz von Sensoren erfasst wird, die dazu konfiguriert sind, Echtzeit-Emissionen zu überwachen, die mit dem einen oder den mehreren industriellen Prozessen in Zusammenhang stehen, und wobei die erfassten Echtzeit-Messdaten umfassen: (i) Emissionen, die durch eine Mehrzahl von Punktmessungs-Gassensoren gemessen werden, die in unmittelbarer Nähe zu potenziellen Leckquellen innerhalb einer Industrieanlage positioniert sind; und (ii) Emissionen, die durch eine oder mehrere Gaswolken-Bildgebungskameras gemessen werden, die so positioniert sind, dass sie die Gesamtemissionen der Industrieanlage in Echtzeit überwachen;
Bestimmen, auf der Grundlage der durch die Mehrzahl von Punktmessungs-Gassensoren gemessenen Emissionen, eines Gesamtemissionswertes, der ein Aggregat darstellt, das durch eine Summation aller Emissionsquellen erhalten wird;
Bestimmen, auf der Grundlage der durch die eine oder die mehreren Gaswolken-Bildgebungskameras gemessenen Emissionen, eines Bruttoemissionswertes, der die anlagenweiten Emissionen der Industrieanlage darstellt;
Evaluieren des Gesamtemissionswertes relativ zu dem Bruttoemissionswert, um einen Satz evaluierter Emissionsdaten zu generieren;
Bestimmen der einen oder der mehreren Betriebsmodifizierungen mindestens teilweise auf der Grundlage des Satzes evaluierter Emissionsdaten;
auf der Grundlage der einen oder der mehreren Betriebsmodifizierungen, Durchführen einer oder mehrerer Aktionen, die mit dem einen oder den mehreren industriellen Prozessen im Zusammenhang stehen; und
Senden eines Steuersignals, das auf der Grundlage der einen oder der mehreren Betriebsmodifizierungen konfiguriert wurde, an einen Controller, der mit dem einen oder den mehreren industriellen Prozessen verknüpft ist.

## Revendications

1. Système (900), comprenant :
un ou plusieurs processeurs (920) ;
une mémoire (930, 940) présentant stocké sur celle-ci un code de programme qui, en exécution avec l'au moins un processeur (920), amène le système (900) à :
déterminer un ensemble de contraintes d'émissions associées à une optimisation d'émission pour un domaine industriel apparenté à un ou plusieurs processus industriels qui produisent un ou plusieurs produits de processus industriels ;
configurer un modèle d'optimisation d'émissions sur la base au moins en partie de l'ensemble de contraintes d'émissions et d'au moins une autre contrainte hors émission ;
recevoir une demande d'optimisation d'émissions pour optimiser des émissions de carbone apparentées au ou aux processus industriels ; et
en réponse à la demande d'optimisation d'émissions :
appliquer le modèle d'optimisation d'émissions à des données de mesure en temps réel associées au ou aux processus industriels pour déterminer une ou plusieurs modifications de fonctionnement pour le ou les processus industriels qui satisfont au moins l'ensemble de contraintes d'émissions et optimisent l'au moins une contrainte hors émission, dans lequel au moins une partie des données de mesure en temps réel sont capturées par un ensemble de capteurs configurés pour surveiller des émissions en temps réel apparentées au ou aux processus industriels, et dans lequel les données de mesure en temps réel capturées comprennent : (i) des émissions mesurées par une pluralité de capteurs de gaz à mesure en un point positionnés en étroite proximité de potentielles sources de fuite à l'intérieur d'une installation industrielle ; et (ii) des émissions mesurées par une ou plusieurs caméras d'imagerie de nuage de gaz positionnées pour surveiller des émissions totales de l'installation industrielle en temps réel ;
déterminer, sur la base des émissions mesurées par la pluralité de capteurs de gaz à mesure en un point, une valeur d'émissions totales représentant un agrégat obtenu par l'intermédiaire d'une sommation de toutes les sources d'émission ;
déterminer, sur la base des émissions mesurées par la ou les caméras d'imagerie de nuage de gaz, une valeur d'émissions brutes représentant des émissions au niveau de l'installation de l'installation industrielle ;
évaluer la valeur d'émissions totales par rapport à la valeur d'émissions brutes pour générer un ensemble de données d'émissions évaluées ;
déterminer la ou les modifications de fonctionnement sur la base au moins en partie de l'ensemble de données d'émissions évaluées ;
sur la base de la ou des modifications de fonctionnement, réaliser une ou plusieurs actions associées au ou aux processus industriels ; et
transmettre un signal de contrôle configuré sur la base de la ou des modifications de fonctionnement à un contrôleur associé au ou aux processus industriels.

2. Système (900) selon la revendication 1, dans lequel le code de programme amène en outre le système (900) à :
capturer au moins une partie des données de mesure en temps réel par l'intermédiaire d'un ensemble de caméras d'imagerie de nuage de gaz configurées pour surveiller des émissions en temps réel apparentées au ou aux processus industriels ; et
appliquer le modèle d'optimisation d'émissions à la partie des données de mesure en temps réel associée à l'ensemble de caméras d'imagerie de nuage de gaz.

3. Système (900) selon l'une quelconque des revendications 1 à 2, dans lequel le code de programme amène en outre le système (900) à :
capturer au moins une partie des données de mesure en temps réel par l'intermédiaire d'un ensemble de dispositifs capteurs de fuite de gaz configurés pour surveiller ou prédire des fuites de gaz apparentées au ou aux processus industriels ; et
appliquer le modèle d'optimisation d'émissions à la partie des données de mesure en temps réel associée à l'ensemble de dispositifs capteurs de fuite de gaz.

4. Système (900) selon l'une quelconque des revendications 1 à 3, dans lequel le code de programme amène en outre le système (900) à :
déterminer des données de marché qui comprennent au moins l'un de données de coût de gaz en temps réel correspondant à un gaz employé par le ou les processus industriels, de données de coût d'électricité en temps réel correspondant au ou aux processus industriels, de données de coût de crédit carbone disponible pour un emplacement associé au domaine industriel, et de données de taux d'intérêt en temps réel associé à un système bancaire associé à l'emplacement ; et
appliquer le modèle d'optimisation d'émissions aux données de mesure en temps réel et aux données de marché pour déterminer la ou les modifications de fonctionnement pour le ou les processus industriels qui satisfont l'ensemble de contraintes d'émissions.

5. Système (900) selon l'une quelconque des revendications 1 à 4, dans lequel le code de programme amène en outre le système (900) à :
déterminer des données de configuration statique qui comprennent au moins l'un de données de ressources apparentées à un matériau de ressource employé par le ou les processus industriels, de données de coûts associées au ou aux processus industriels, de données d'entreprise apparentées à des actifs pour une entreprise associée au ou aux processus industriels, et de données réglementaires apparentées aux incitations réglementaires pour un emplacement géographique d'une installation industrielle associée au ou aux processus industriels ; et
appliquer le modèle d'optimisation d'émissions aux données de mesure en temps réel et aux données de configuration statique pour déterminer la ou les modifications de fonctionnement pour le ou les processus industriels qui satisfont l'ensemble de contraintes d'émissions.

6. Système (900) selon l'une quelconque des revendications 1 à 5, dans lequel le code de programme amène en outre le système (900) à :
déterminer l'ensemble de contraintes d'émissions sur la base au moins en partie d'un ensemble de seuils de référence de fonctionnement pour le ou les processus industriels.

7. Système (900) selon l'une quelconque des revendications 1 à 6, dans lequel le code de programme amène en outre le système (900) à :
déterminer l'ensemble de contraintes d'émissions sur la base au moins en partie d'un ensemble de contraintes internes qui comprennent au moins l'un d'un capital pour une entreprise associée au ou aux processus industriels, de ressources disponibles pour le ou les processus industriels, d'une infrastructure pour une installation industrielle associée au ou aux processus industriels, de règles de tolérance de risque pour le ou les processus industriels, et de chronologie de mise en œuvre pour effectuer l'optimisation d'émission associée au ou aux processus industriels.

8. Système (900) selon l'une quelconque des revendications 1 à 7, dans lequel le code de programme amène en outre le système (900) à :
déterminer l'ensemble de contraintes d'émissions sur la base au moins en partie d'un ensemble de contraintes externes qui comprennent des informations réglementaires pour un emplacement géographique d'une installation industrielle associée au ou aux processus industriels, d'informations économiques pour l'emplacement géographique, d'informations sociales pour l'emplacement géographique, d'informations techniques pour un environnement de fonctionnement associé au ou aux processus industriels, d'informations légales pour l'environnement de fonctionnement, et d'informations environnementales pour l'emplacement géographique ou pour l'environnement de fonctionnement.

9. Système (900) selon l'une quelconque des revendications 1 à 8, dans lequel le code de programme amène en outre le système (900) à :
déterminer l'ensemble de contraintes d'émissions sur la base au moins en partie d'une entrée utilisateur reçue par l'intermédiaire d'une visualisation de tableau de bord rendue sur un affichage d'un dispositif utilisateur.

10. Système (900) selon la revendication 1, dans lequel le code de programme amène en outre le système (900) à :
transmettre le signal de contrôle en réponse à un niveau de risque associé à la ou aux modifications de fonctionnement étant inférieur à un seuil de risque défini.

11. Système (900) selon l'une quelconque des revendications 1 à 10, dans lequel le code de programme amène en outre le système (900) à :
enregistrer des données associées à la ou aux modifications de fonctionnement et des données d'horodatage apparentées dans une base de données d'historique de décarbonation ;
générer une notification d'ordre de travail pour le ou les processus industriels sur la base au moins en partie de la ou des modifications de fonctionnement ; et
en réponse à la ou aux modifications de fonctionnement appliquées au ou aux processus industriels par l'intermédiaire de la notification d'ordre de travail, mettre à jour les données dans la base de données d'historique de décarbonation sur la base au moins en partie de la notification d'ordre de travail,
dans lequel le modèle d'optimisation d'émissions détermine la ou les modifications de fonctionnement sur la base au moins en partie des données dans la base de données d'historique de décarbonation.

12. Procédé mis en œuvre par ordinateur comprenant :
la détermination d'un ensemble de contraintes d'émissions associées à une optimisation d'émission pour un domaine industriel apparenté à un ou plusieurs processus industriels qui produisent un ou plusieurs produits de processus industriels ;
la configuration d'un modèle d'optimisation d'émissions sur la base au moins en partie de l'ensemble de contraintes d'émissions et au moins d'une autre contrainte hors émission ;
la réception d'une demande d'optimisation d'émissions pour optimiser des émissions de carbone apparentées au ou aux processus industriels ; et
en réponse à la demande d'optimisation d'émissions :
l'application du modèle d'optimisation d'émissions à des données de mesure en temps réel associées au ou aux processus industriels pour déterminer une ou plusieurs modifications de fonctionnement pour le ou les processus industriels qui satisfont au moins l'ensemble de contraintes d'émissions et optimisent l'au moins une contrainte hors émission, dans lequel au moins une partie des données de mesure en temps réel sont capturées par un ensemble de capteurs configurés pour surveiller des émissions en temps réel apparentées au ou aux processus industriels, et dans lequel les données de mesure en temps réel capturées comprennent : (i) des émissions mesurées par une pluralité de capteurs de gaz à mesure en un point positionnés en étroite proximité de potentielles sources de fuite à l'intérieur d'une installation industrielle ; et (ii) des émissions mesurées par une ou plusieurs caméras d'imagerie de nuage de gaz positionnées pour surveiller des émissions totales de l'installation industrielle en temps réel ;
la détermination, sur la base des émissions mesurées par la pluralité de capteurs de gaz à mesure en un point, d'une valeur d'émissions totales représentant un agrégat obtenu par l'intermédiaire d'une sommation de toutes les sources d'émission ;
la détermination, sur la base des émissions mesurées par la ou les caméras d'imagerie de nuage de gaz, d'une valeur d'émissions brutes représentant des émissions au niveau de l'installation de l'installation industrielle ;
l'évaluation de la valeur d'émissions totales apparentée à la valeur d'émissions brutes pour générer un ensemble de données d'émissions évaluées ;
la détermination de la ou des modifications de fonctionnement sur la base au moins en partie de l'ensemble de données d'émissions évaluées ;
sur la base de la ou des modifications de fonctionnement, la réalisation d'une ou plusieurs actions associées au ou aux processus industriels ; et
la transmission d'un signal de contrôle configuré sur la base de la ou des modifications de fonctionnement à un contrôleur associé au ou aux processus industriels.
